(19) 

Europäisches Patentamt

European Patent Office

Office européen des brevets

(11) **EP 4 318 275 A1**

(12) **EUROPEAN PATENT APPLICATION**
published in accordance with Art. 153(4) EPC

(43) Date of publication:
**07.02.2024 Bulletin 2024/06**

(21) Application number: **21938212.4**

(22) Date of filing: **26.04.2021**

(51) International Patent Classification (IPC):
***G06F 17/16*** *(2006.01)*

(52) Cooperative Patent Classification (CPC):
**G06F 17/16**

(86) International application number:
**PCT/CN2021/089880**

(87) International publication number:
**WO 2022/226721 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LEE, Chun Hang**
  **Shenzhen, Guangdong 518129 (CN)**
• **LI, Mingke**
  **Shenzhen, Guangdong 518129 (CN)**
• **ZHANG, Yidong**
  **Shenzhen, Guangdong 518129 (CN)**

(74) Representative: **Thun, Clemens et al**
**Mitscherlich PartmbB**
**Patent- und Rechtsanwälte**
**Karlstraße 7**
**80333 München (DE)**

(54) **MATRIX MULTIPLIER AND METHOD FOR CONTROLLING MATRIX MULTIPLIER**

(57) This application discloses a matrix multiplier and a matrix multiplier control method, and relates to the field of computer technologies. The matrix multiplier includes an operation circuit (403) and a controller (404). The operation circuit (403) is connected to the controller (404). The controller (404) is configured to control the operation circuit to reuse a left fractal matrix $A_{sr}$ in n consecutive clock cycles, and control the operation circuit (403) to use a right fractal matrix $B_{rt}$ in n right fractal matrices in each of the n consecutive clock cycles. The operation circuit (403) is configured to multiply, in each of the n consecutive clock cycles, the left fractal matrix by the right fractal matrix in the n right fractal matrices, to obtain n matrix operation results.

FIG. 4

EP 4 318 275 A1

**Description**

**TECHNICAL FIELD**

Embodiments of this application relate to the field of computer technologies, and in particular, to a matrix multiplier and a matrix multiplier control method.

**BACKGROUND**

With continuous development of a convolutional neural network in fields such as image classification and image recognition, improving running efficiency of the convolutional neural network and shortening execution time of the convolutional neural network become a current research hotspot. The convolutional neural network is mainly about convolution calculation and full connected calculation, calculation amounts of the two occupy more than 95% of a total calculation amount of the entire convolutional neural network, and both the convolution calculation and the full connected calculation may be converted into a multiplication operation between two matrices. Therefore, improving performance of a matrix multiplication processor directly affects operation performance of the convolutional neural network.

A matrix multiplier is configured to implement a multiplication operation between two matrices, and involves a large quantity of multiplication and accumulation operations. An existing matrix multiplier usually uses a vector multiplication method. It is assumed that C=A*B, and a matrix processor can simultaneously calculate M elements. The matrix multiplier loads an $i^{th}$ row vector of a matrix A to a source register, loads a $j^{th}$ column vector of a matrix B to another register, and then implements a point multiplication operation of corresponding elements between the two registers, and finally completes an accumulation operation through an adder tree, to calculate an element $C_{ij}$ in an $i^{th}$ row and a $j^{th}$ column of a matrix C. Finally, a final matrix C is calculated by performing vector multiplication for a plurality of times.

In the foregoing matrix multiplier, if a multiplication operation of two N*N matrices needs to be completed, N^3 point multiplication operations are required. Because the matrix multiplication processor may perform multiplication between M elements in one clock cycle, duration required for completing matrix multiplication once is N^3/M clocks. This is time-consuming. In addition, a calculation size of the matrix multiplier is strict, and calculation efficiency is low. Therefore, designing a new matrix multiplier with higher operation performance becomes a problem that needs to be urgently resolved.

**SUMMARY**

Embodiments of this application provide a matrix multiplier and a matrix multiplier control method. The matrix multiplier performs a matrix fractal-based matrix multiplication operation, and the operation is flexible and efficient. In this case, the matrix multiplier may further reduce power consumption, thereby improving performance of an entire convolution operation system.

A first aspect of embodiments of this application provides a matrix multiplier. The matrix multiplier includes an operation circuit and a controller, and the operation circuit is connected to the controller.

The controller is configured to perform the following actions. The controller needs to control the operation circuit to reuse a left fractal matrix $A_{sr}$ in n consecutive clock cycles, and further needs to control the operation circuit to use a right fractal matrix $B_{rt}$ in n right fractal matrices in each of the n consecutive clock cycles. The left fractal matrix $A_{sr}$ is any fractal matrix included in a left matrix, and the left matrix is an M*K matrix. The right fractal matrix $B_{rt}$ is a fractal matrix in an $r^{th}$ row included in a right matrix, the n right fractal matrices are n consecutive right fractal matrices in the $r^{th}$ row included in the right matrix. A size of the right matrix is K*N. M, K, N, s, r, t are all positive integers greater than 0, and n is a positive integer greater than 2.

The operation circuit is configured to multiply, in each of the n consecutive clock cycles, the left fractal matrix $A_{sr}$ by one right fractal matrix $B_{rt}$ in the n right fractal matrices, to n matrix operation results are obtained in the n consecutive clock cycles.

The foregoing matrix multiplier may complete an operation of a left fractal matrix and a right fractal matrix in one clock cycle, and finally obtain a final multiplication result of a left matrix and a right matrix based on multiplication between the fractal matrices. In this way, operation complexity caused by point multiplication performed on a single data element can be avoided, and an operation is flexible and efficient. In addition, the controller further needs to control the operation circuit to reuse the left fractal matrix, so that the operation circuit does not need to read different left fractal matrix data in each clock cycle, but refreshes left fractal matrix data once every n clock cycles, thereby reducing power consumption caused by data reading and improving performance of the entire matrix multiplier.

In a possible implementation, the operation circuit is specifically configured to:
calculate $A_{sr} * B_{rt}$ in an $i^{th}$ clock cycle of the n consecutive clock cycles, and calculate $A_{sr} * B_{r(t+1)}$ in an $(i+1)^{th}$ clock cycle, where $1 \le i < n$.

When reuse left fractal matrix data, the operation circuit in the matrix multiplier needs to complete a matrix multiplication operation of one left fractal matrix and n right fractal matrices in n consecutive clock cycles. Therefore, the matrix multiplier needs to sequentially input r rows of consecutive n right fractal matrices $B_{rt}$, calculate $A_{sr} * B_{rt}$ in a previous clock cycle, and calculate $A_{sr} * B_{r(t+1)}$ in a next clock cycle, to provide an operation intermediate value for subsequently obtaining a multiplication result of the left matrix and the right matrix.

In a possible implementation, the controller may further control the operation circuit to reuse right fractal matrix data. Specifically, the controller needs to control the operation circuit to reuse a right fractal matrix $B_{rt}$ in the n consecutive clock cycles, where the right fractal matrix $B_{rt}$ is any fractal matrix included in the right matrix. Then, the controller controls the operation circuit to use a left fractal matrix $A_{sr}$ in n left fractal matrices in each of the n consecutive clock cycles, where the left fractal matrix $A_{sr}$ is a fractal matrix of an $r^{th}$ column included in the right matrix, and the n left fractal matrices are n consecutive left fractal matrices in the $r^{th}$ column included in the right matrix.

The operation circuit is configured to perform the following actions. The operation circuit multiplies, in each of the n consecutive clock cycles, the left fractal matrix $A_{sr}$ in the n left fractal matrices by the right fractal matrix $B_{rt}$, to obtain n matrix operation results.

Similar to the foregoing embodiment, the foregoing matrix multiplier may complete an operation of a left fractal matrix and a right fractal matrix in one clock cycle, and finally obtain a final multiplication result of a left matrix and a right matrix based on multiplication between the fractal matrices. In this way, operation complexity caused by point multiplication performed on a single data element can be avoided, and an operation is flexible and efficient. In addition, the controller further needs to control the operation circuit to reuse the right fractal matrix, so that the operation circuit does not need to read different right fractal matrix data in each clock cycle, but refreshes right fractal matrix data once every n clock cycles, thereby reducing power consumption caused by data reading and improving performance of the entire matrix multiplier.

In a possible implementation, the operation circuit is specifically configured to:

calculate $A_{sr} * B_{rt}$ in an $i^{th}$ clock cycle of the n consecutive clock cycles, and calculate $A_{(s+1)r} * B_{rt}$ in an $(i+1)^{th}$ clock cycle, where $1 \leq i < n$.

When reuse right fractal matrix data, the operation circuit in the matrix multiplier needs to complete a matrix multiplication operation of n left fractal matrices and one right fractal matrix in n consecutive clock cycles. Therefore, the matrix multiplier needs to sequentially input r columns of consecutive n left fractal matrices $A_{sr}$, calculate $A_{sr} * B_{rt}$ in a previous clock cycle, and calculate $A_{(s+1)r} * B_{rt}$ in a next clock cycle, to provide an operation intermediate value for subsequently obtaining a multiplication result of the left matrix and the right matrix.

In a possible implementation, after obtaining a fractal matrix by dividing a complete matrix into blocks, the matrix multiplier obtains an intermediate value based on a result of an operation between fractal matrices, and then obtains a multiplication result of two complete matrices based on the intermediate value. Therefore, block division processing needs to be first performed on a left matrix and a right matrix to obtain a left fractal matrix and a right fractal matrix. The controller needs to fractalize the left fractal matrix and the right fractal matrix based on distribution of operation units in the operation circuit.

The operation circuit includes operation units of X rows * Y columns. Each operation unit completes, in a clock cycle, a vector multiplication operation between one piece of row vector data of the left fractal matrix and one piece of column vector data of the right fractal matrix, and obtains an operation result. In addition, each operation unit includes L multipliers, and each multiplier is configured to perform a multiplication operation between one data element in the row vector data and one data element in the column vector data.

When the operation units in the operation circuit are distributed based on the foregoing case, the controller needs to divide the left matrix into blocks by using a sub-block with a size of X*L as a unit to obtain S*R left fractal matrices, and then mark a left fractal matrix in an $s^{th}$ row and an $r^{th}$ column in the S*R left fractal matrices as $A_{sr}$. Both S and R are positive integers greater than 0, s is any positive integer from 1 to S, and r is any positive integer from 1 to R.

The controller further needs to divide the right matrix into blocks by using a sub-block with a size of L*Y as a unit to obtain R*T right fractal matrices, and mark a right fractal matrix in an $r^{th}$ row and a $t^{th}$ column in the R*T right fractal matrices as $B_{rt}$. Both R and T are positive integers greater than 0, r is any positive integer from 1 to R, and t is any positive integer from 1 to T.

After the controller fractalizes the left matrix and the right matrix based on the distribution of the operation units in the operation circuit, the obtained left fractal matrix and right fractal matrix can adapt to a size of the matrix multiplier, so that the matrix multiplier can complete a matrix multiplication operation between two fractal matrices in an operation cycle, making the operation more flexible and concise.

In a possible implementation, the matrix multiplier further includes a first memory and a second memory.

The first memory and the second memory are separately connected to the operation circuit, and are configured to store the left matrix and the right matrix. The operation circuit obtains the left fractal matrix from the first memory, and obtains the right fractal matrix from the second memory. When the controller controls the operation circuit to reuse the left fractal matrix $A_{sr}$, the controller needs to first determine whether T can be exactly divided by n. If yes, the controller needs to control the operation circuit to reuse each left fractal matrix $A_{sr}$ in the left matrix for n times. In addition, if a reused previous left fractal matrix is a left fractal matrix $A_{sr}$, a next reused left fractal matrix is a left fractal matrix $A_{s(r+1)}$, and needs to be reused for n times.

In a possible implementation, in a process in which the controller controls the operation circuit to reuse the left fractal matrix, the controller determines that T cannot be exactly divided by n, and a remainder c is greater than or equal to 2. In this case, if the controller reuses each left fractal matrix for n times, finally there are c columns of remaining right fractal matrices. In this case, the controller first controls the operation circuit to reuse each left fractal matrix $A_{sr}$ for n times. When there are c columns of remaining right fractal matrices $B_{rt}$, the controller controls the operation circuit to reuse each left fractal matrix $A_{sr}$ for c times from the first left fractal matrix.

In a possible implementation, in a process in which the controller controls the operation circuit to reuse the left fractal matrix, when the controller determines that T cannot be exactly divided by n, and a remainder c is equal to 1, if the controller reuses each left fractal matrix for n times, finally there is one column of remaining right fractal matrices. To avoid single-cycle accumulation, the controller first controls the operation circuit to reuse each left fractal matrix $A_{sr}$ for n times. When there are (n+1) columns of remaining right fractal matrices $B_{rt}$, the controller then controls the operation circuit to reuse each left fractal matrix $A_{sr}$ for z times, where z is a positive integer greater than or equal to 2 and less than or equal to n-1. Finally, the controller further controls the operation circuit to reuse each left fractal matrix $A_{sr}$ for q times, where q is a positive integer greater than or equal to 2.

In a possible implementation, in a process in which the controller controls the operation circuit to reuse the right fractal matrix, when T can be exactly divided by n, the controller control the operation circuit to reuse each right fractal matrix $B_{rt}$ for n times. If a reused previous right fractal matrix is a right fractal matrix $B_{rt}$, a next reused right fractal matrix is a left fractal matrix $B_{(r+1)t}$.

In a possible implementation, in a process in which the controller controls the operation circuit to reuse the right fractal matrix, when the controller determines that S cannot be exactly divided by n, and a remainder c is greater than or equal to 2, the controller first controls the operation circuit to reuse each right fractal matrix $B_{rt}$ for n times. When there are c rows of left fractal matrices $A_{sr}$ left, the controller controls the operation circuit to reuse each right fractal matrix $B_{rt}$ for c times.

In a possible implementation, in a process in which the controller controls the operation circuit to reuse the right fractal matrix, when the controller determines that T cannot be exactly divided by n, and a remainder c is equal to 1, the controller first controls the operation circuit to reuse each right fractal matrix $B_{rt}$ for n times. When there are (n+1) rows of remaining left fractal matrices $A_{sr}$, the controller controls the operation circuit to reuse each right fractal matrix $B_{rt}$ for p times, where p is a positive integer greater than or equal to 2 and less than or equal to n-1. Finally, the operation circuit reuses the right fractal matrix $B_{rt}$ for f times, where f is a positive integer greater than or equal to 2.

In a possible implementation, the operation circuit includes L multipliers, and each of the L multipliers includes an input end A, an input end B, a control module, a first register, a second register, and a third register. The input end A and the input end B are connected to the control module, and the control module is connected to the first register, the second register, and the third register. The input end A is configured to input a first data element in a row vector to the first register, and the input end B is configured to input a second data element in a column vector to the second register.

The first register is configured to store the first data element and input the first data element to the multiplier. The second register is configured to store the second data element and input the second data element to the multiplier. The multiplier is configured to receive the first data element and the second data element that are inputted by the first register and the second register, and perform a multiplication operation on the first data element and the second data element.

The control module is configured to generate a control signal based on the first data element and the first data element that are received by the input end A and the input end B, and the control signal is used for controlling switch states of the first register, the second register, and the third register.

In a possible implementation, the control module is specifically configured to control the first register and the second register to be off, when the first data element received by the input end A or the second data element received by the input segment B is 0. The controller generates a first control signal. The first control signal is used for writing an output result 0 to the third register, and output an output result. When neither the first data element received by the input end A nor the second data element received by the input segment B is 0, the control module controls the first register and the second register to be closed, and control the third register to be off.

The controller controls the first register to read the first data element, control the second register to read the second data element, control the multiplier to perform a multiplication operation on the first data element and the second data element, to obtain an operation result, and output the operation result.

A second aspect of embodiments of this application provides a matrix multiplier, including:

obtaining a left fractal matrix $A_{sr}$ and n right fractal matrices, where the left fractal matrix $A_{sr}$ is any fractal matrix included in a left matrix, the left matrix is an M*K matrix, the n right fractal matrices are n consecutive right fractal matrices in an r$^{th}$ row included in a right matrix, the right matrix is a K*N matrix, M, K, N, s, r, and t are all positive integers greater than 0, and n is a positive integer greater than 2;

controlling an operation circuit to reuse the left fractal matrix $A_{sr}$ in n consecutive clock cycles;

controlling the operation circuit to use a right fractal matrix $B_{rt}$ in the n right fractal matrices in the n consecutive clock cycles, where the right fractal matrix $B_{rt}$ is a fractal matrix in an r$^{th}$ row included in the right matrix; and

multiplying, in each of the n consecutive clock cycles, the left fractal matrix $A_{sr}$ by a right fractal matrix $B_{rt}$ in the n right fractal matrices, to obtain n matrix operation results.

In a possible implementation, the multiply, in each of the n consecutive clock cycles, the left fractal matrix $A_{sr}$ by a right fractal matrix $B_{rt}$ in the n right fractal matrices, to obtain n matrix operation results includes:

controlling, in an i$^{th}$ clock cycle of the n consecutive clock cycles, the operation circuit to calculate $A_{sr} * B_{rt}$; and
controlling, in an (i+1)$^{th}$ clock cycle of the n consecutive clock cycles, the operation circuit to calculate $A_{sr} * B_{r(t+1)}$, where 1≤i<n.

In a possible implementation, the method further includes:

controlling the operation circuit to reuse a right fractal matrix $B_{rt}$ in n consecutive clock cycles, where the right fractal matrix $B_{rt}$ is any fractal matrix included in the right matrix;

controlling the operation circuit to use a left fractal matrix $A_{sr}$ of n left fractal matrices in each of the n consecutive clock cycles, where the left fractal matrix $A_{sr}$ is a fractal matrix of an r$^{th}$ column included in the right matrix, and the n left fractal matrices are n consecutive left fractal matrices of the r$^{th}$ column included in the right matrix; and

multiplying, in each of the n consecutive clock cycles, the left fractal matrix $A_{sr}$ in the n left fractal matrices by the right fractal matrix $B_{rt}$, to obtain n matrix operation results.

In a possible implementation, the multiply, in each of the n consecutive clock cycles, the left fractal matrix $A_{sr}$ in the n left fractal matrices by the right fractal matrix $B_{rt}$, to obtain n matrix operation results includes:

controlling, in an i$^{th}$ clock cycle of the n consecutive clock cycles, the operation circuit to calculate $A_{sr} * B_{rt}$; and
controlling, in an (i+1)$^{th}$ clock cycle of the n consecutive clock cycles, the operation circuit to calculate $A_{(s+1)r} * B_{rt}$, where 1≤i<n.

In a possible implementation, the method further includes:

dividing the left matrix into blocks by using a sub-block with a size of X*L as a unit to obtain S*R left fractal matrices;
marking a left fractal matrix in an s$^{th}$ row and an r$^{th}$ column in the S*R left fractal matrices as $A_{sr}$, where both S and R are positive integers greater than 0, s is any positive integer from 1 to S, and r is any positive integer from 1 to R;
dividing the right matrix into blocks by using a sub-block with a size of L*Y as a unit, to obtain R*T right fractal matrices; and
marking a right fractal matrix in an r$^{th}$ row and a t$^{th}$ column in the R*T right fractal matrices as $B_{rt}$, where both R and T are positive integers greater than 0, r is any positive integer from 1 to R, and t is any positive integer from 1 to T.

The operation circuit includes operation units of X rows * Y columns. Each operation unit is configured to perform, in a clock cycle, a vector multiplication operation on one piece of row vector data of the left fractal matrix $A_{sr}$ and one piece of column vector data of the right fractal matrix $B_{rt}$, to obtain an operation result. Each operation unit includes L multipliers, and each of the L multipliers is configured to perform a multiplication operation between a data element in the row vector data and a data element in the column vector data.

In a possible implementation, the method further includes:

when T can be exactly divided by n, controlling the operation circuit to reuse each left fractal matrix $A_{sr}$ for n times; and
after the operation circuit reuses the left fractal matrix $A_{sr}$ for n times, controlling the operation circuit to reuse the left fractal matrix $A_{s(r+1)}$ for n times.

In a possible implementation, the method further includes:

when T cannot be exactly divided by n, and a remainder c is greater than or equal to 2, first controlling the operation circuit to reuse the left fractal matrix $A_{sr}$ for n times; and
when there are c columns of remaining right fractal matrices $B_{rt}$, then controlling the operation circuit to reuse the left fractal matrix $A_{sr}$ for c times.

In a possible implementation, the method further includes:

when T cannot be exactly divided by n, and a remainder c is equal to 1, first controlling the operation circuit to reuse the left fractal matrix $A_{sr}$ for n times;
when there are (n+1) columns of remaining right fractal matrices $B_{rt}$, then controlling the operation circuit to reuse the left fractal matrix $A_{sr}$ for z times, where z is a positive integer greater than or equal to 2 and less than or equal to n-1; and
finally controlling, the operation circuit to reuse the left fractal matrix $A_{sr}$ for q times, where q is a positive integer greater than or equal to 2.

In a possible implementation, the method further includes:

when T can be exactly divided by n, controlling the operation circuit to reuse the right fractal matrix $B_{rt}$ for n times; and after the operation circuit reuses the right fractal matrix $B_{rt}$ for n times, controlling the operation circuit to reuse a left fractal matrix $B_{(r+1)t}$ for n times.

In a possible implementation, the method further includes:

when S cannot be exactly divided by n, and a remainder c is greater than or equal to 2, first controlling the operation circuit to reuse the right fractal matrix $B_{rt}$ for n times; and

when there are c rows of left fractal matrices $A_{sr}$ left, controlling the operation circuit to reuse the right fractal matrix $B_{rt}$ for c times.

In a possible implementation, the method further includes:

when T cannot be exactly divided by n, and a remainder c is equal to 1, first controlling the operation circuit to reuse the right fractal matrix $B_{rt}$ for n times;
when there are (n+1) rows of remaining left fractal matrices $A_{sr}$, then controlling the operation circuit to reuse the right fractal matrix $B_{rt}$ for p times, where p is a positive integer greater than or equal to 2 and less than or equal to n-1; and
finally controlling the operation circuit to reuse the right fractal matrix $B_{rt}$ for f times, where f is a positive integer greater than or equal to 2.

The foregoing aspects or another aspects of this application are specifically described in the following embodiments.

**BRIEF DESCRIPTION OF DRAWINGS**

FIG. 1 is a schematic diagram of a matrix multiplication calculation formula according to an embodiment of this application;
FIG. 2 is a schematic diagram of a structure of a matrix multiplier according to an embodiment of this application;
FIG. 3 is a schematic diagram of operations of a matrix multiplier according to an embodiment of this application;
FIG. 4 is a schematic diagram of a structure of another matrix multiplier according to an embodiment of this application;
FIG. 5 is a schematic diagram of a structure of an operation unit according to an embodiment of this application;
FIG. 6 is a schematic diagram of a structure of another operation unit according to an embodiment of this application;
FIG. 7 is a schematic diagram of a matrix fractal according to an embodiment of this application;
FIG. 8 is a schematic diagram of a matrix fractal according to an embodiment of this application;
FIG. 9 is a schematic diagram of a left matrix and a right matrix according to an embodiment of this application;
FIG. 10 is a schematic diagram of another left matrix and another right matrix according to an embodiment of this application;
FIG. 11 is a schematic diagram of another left matrix and another right matrix according to an embodiment of this application;
FIG. 12 is a schematic diagram of another left matrix and another right matrix according to an embodiment of this application;
FIG. 13 is a schematic diagram of wiring of an operation circuit according to an embodiment of this application;
FIG. 14 is a schematic diagram of a structure of a Booth multiplier according to an embodiment of this application; and
FIG. 15 is a schematic diagram of a structure of a matrix multiplier according to an embodiment of this application.

## DESCRIPTION OF EMBODIMENTS

Embodiments of this application provide a matrix multiplier and a matrix multiplier control method. The matrix multiplier performs a matrix fractal-based matrix multiplication operation, and the operation is flexible and efficient. In this case, the matrix multiplier may further reduce power consumption, thereby improving performance of an entire convolution operation system.

The following describes technical solutions in this application in detail with reference to accompanying drawings in this application. Apparently, the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In recent years, a convolutional neural network has excellent performance in image classification, image recognition, audio recognition, and another related field. Therefore, a method of an application-specific integrated circuit is used to accelerate an operation of the convolutional neural network, improve running efficiency of the convolutional neural network, and shorten execution time of the convolutional neural network. This has become a research hotspot. Main operation components of the convolutional neural network are convolution calculation and full connected calculation, and the two occupy more than 95% of a total operation amount of the entire convolutional neural network.

Strictly speaking, a convolution operation is not equivalent to a matrix multiplication operation. However, the convolution operation may be converted into the matrix multiplication operation through proper data adjustment. For example, the convolutional neural network includes K convolution kernels, and each convolution kernel is three-dimensional. In other words, each convolution kernel includes data in three dimensions: a length, a width, and a depth of the data. An essence of the convolution kernel is a filter, which is configured to extract features. The essence is a combination of a series of weights. N elements at a same position in a specific direction of the K convolution kernels are extracted, to obtain an N*K weight matrix. In this way, a plurality of convolution kernels may be stored in a form of a plurality of weight matrices. When a related convolution operation is performed, the weight matrix may be called to complete a multiplication operation with an input matrix.

An essence of the fully connected (full connected, FC) operation is a multiplication operation between a vector and a matrix, and the multiplication operation between a vector and a matrix may alternatively be converted into a multiplication operation between a matrix and a matrix. Based on the foregoing descriptions, an operation state of the matrix multiplication operation directly affects operation performance of the convolutional neural network, and designing a more efficient matrix multiplier is a key to improving performance of the convolutional neural network.

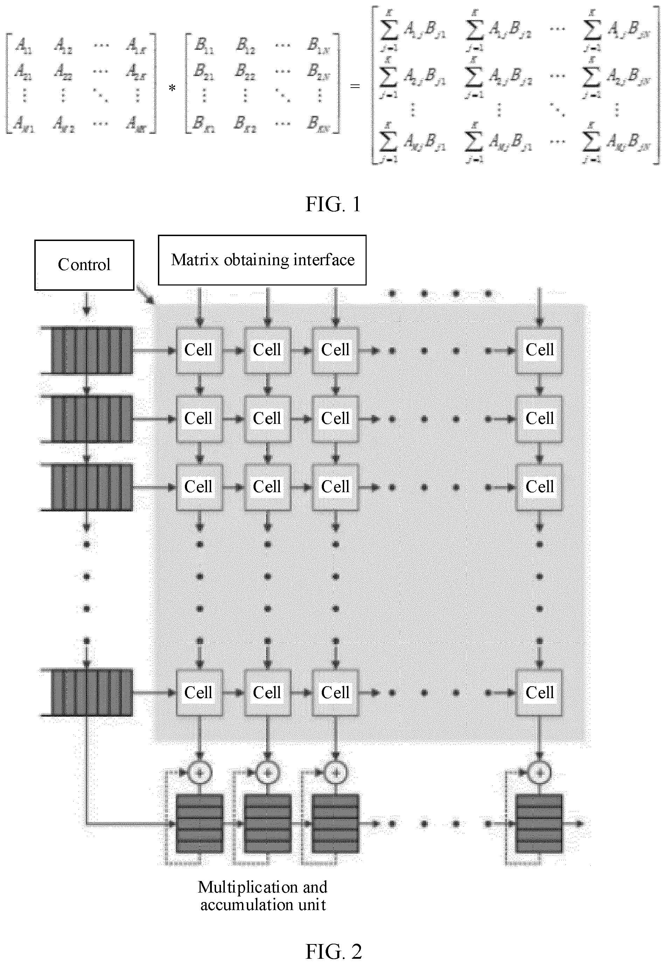

FIG. 1 is a schematic diagram of a matrix multiplication calculation formula according to an embodiment of this application. FIG. 1 shows a calculation formula of a matrix C=A*B. A is a left matrix with a size of M*K, B is a right matrix with a size of K*N, and M, N, and K are all positive integers. The matrix A is multiplied by the matrix B to obtain a matrix C. A point multiplication operation needs to be performed on all data in a row vector of the matrix A and data corresponding to a column vector of the matrix B, and then accumulation is performed. Therefore, to obtain one piece of data in the matrix C, K multiplication operations need to be performed. In this way, M*K*N multiplication operations are required to obtain the entire matrix C.

An existing matrix multiplier uses a pulsating array calculation manner. FIG. 2 is a schematic diagram of a structure of a matrix multiplier according to an embodiment of this application. As shown in the figure, each cell in the figure represents a multiplier. Elements included in each row vector in a left matrix are sequentially inputted into cells in each row, and elements included in each column vector in a right matrix are sequentially inputted into cells in each column. After receiving two data elements, the cell multiplies the two data elements, transmits a multiplication result to an accumulation unit below, and accumulates the multiplication result with a previous accumulation result. In this way, when the data is fully loaded, the pulse array obtains an intermediate value in each clock cycle.

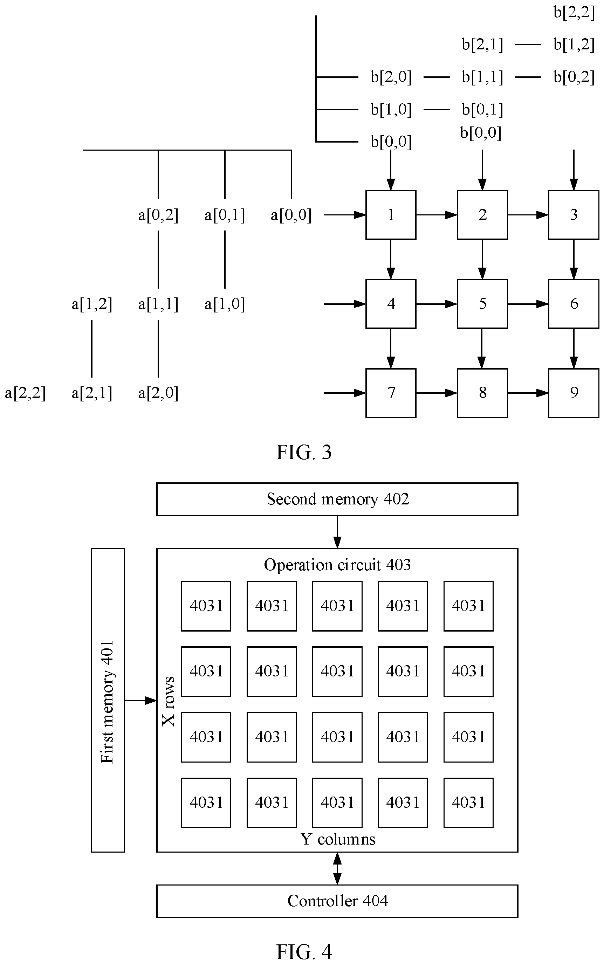

For example, a 3*3 pulse matrix is used as an example. As shown in FIG. 3, a matrix multiplier includes nine multipliers and a plurality of multiplication and accumulation units, and numbers "1" to "9" in FIG. 3 sequentially represent "multiplier 1" to "multiplier 9". In a first clock cycle, an element a[0,0] in the matrix A and an element b[0,0] in the matrix B are inputted to a multiplier 1 (where [i, j] represents an element in an $i^{th}$ row and a $j^{th}$ column of the matrix), and the multiplier 1 performs a multiplication operation on a[0,0] and b[0,0], and transfers an obtained intermediate value to a first multiplication and accumulation unit. In a second clock cycle, the element a[0,0] in the matrix A is transferred to a multiplier 2, an element a[0,1] is transferred to the multiplier 1, the element b[0,0] in the matrix B is transferred to a multiplier 4, and an element b[1,0] is transferred to the multiplier 1. In addition, the element a[1,0] in a second row vector in the matrix A is transferred to the multiplier 4, and the element b[0,1] in the matrix B is transferred to the multiplier 2. In this case, the multiplier 1 calculates a product of a[0,1] and b[1,0], and inputs the product to the first multiplication and accumulation unit, to complete a[0,0]*b[0,0] + a[0,1]*b[1,0]. In addition, the multiplier 2 completes a[0,0]*b[0,1], and stores a[0,0]*b[0,1] in a second multiplication and accumulation unit, and the multiplier 4 completes a[1,0]*b[0, 0], and stores a[1,0]*b[0,0] in a fourth multiplication and accumulation unit.

According to the foregoing mode, in a third clock cycle, a[0,0] enters a multiplier 3, a[0,1] enters the multiplier 2, a[0,2] enters the multiplier 1, a[1,0] enters a multiplier 5, a[1,1] enters the multiplier 4, and a[2,0] enters a multiplier 7. In addition, b[0,0] enters the multiplier 7, b[1,0] enters the multiplier 4, b[2,0] enters the multiplier 1, b[0,1] enters the multiplier 5, b[1,1] enters the multiplier 2, and a[0,2] enters the multiplier 3. After completing a multiplication operation, each multiplier transmits an obtained result to a corresponding multiplication and accumulation unit, and accumulates the result with an intermediate value of a previous clock cycle stored in the multiplication and accumulation unit, to obtain an accumulated value. By analogy, it can be learned that, to implement 3*3 matrix multiplication, seven clock cycles are required. In addition, it can be seen from the foregoing calculation process that in the first several clock cycles, many multipliers do not work, and a calculation density of an entire matrix multiplier is very low. This seriously affects operation efficiency of the matrix multiplier. In addition, when the structure is used to perform a matrix operation, large-size data is required to achieve a pipeline execution effect. In addition, a calculation size is fixed and inflexible. Therefore, a more efficient matrix multiplier is urgently required.

Based on the foregoing content, this application provides a fractal matrix calculation-based matrix multiplier, so that a large amount of data in a convolutional neural network can be calculated efficiently and flexibly with low energy consumption.

It may be understood that the matrix multiplier according to embodiments of this application not only may be applied to fields such as machine learning, deep learning, and a convolutional neural network, but also may be applied to fields such as data image processing and data signal processing, and another field related to a matrix multiplication operation.

FIG. 4 is a schematic diagram of a structure of a matrix multiplier according to an embodiment of this application. As shown in FIG. 4, the matrix multiplier includes a first memory 401, a second memory 402, an operation circuit 403, and a controller 404. The operation circuit 403 may communicate with the first memory 401, the second memory 402, and the controller 404 through a bus. The first memory 401 is configured to store left matrix data, and the second memory 402 is configured to right matrix data. The operation circuit 403 includes a plurality of operation units 4031. Each operation unit 4031 is configured to perform a vector multiplication operation on a vector included in an input matrix. The controller 404 controls outputs of matrix vectors in the first memory 401 and the second memory 402, and controls, based on a preset program or instruction, the operation circuit 403 to complete a matrix multiplication operation.

The first memory 401 is configured to store a left matrix A with a size of M*K. In the left matrix A, data in an $i^{th}$ row and a $j^{th}$ column may be marked as $a_{ij}$, i may be any value in positive integers between 1 and M, and j may be any value in positive integers between 1 and K. The second memory 402 is configured to store a right matrix B with a size of K*N. In the right matrix B, data in an $i^{th}$ row and a $j^{th}$ column may be marked as $b_{ij}$, i may be any value in positive integers between 1 and K, and j may be any value in positive integers between 1 and N.

The operation circuit 403 may include operation units 4031 (a multiplication and accumulation unit MAC) of X rows and Y columns. Each operation unit may independently perform a vector multiplication operation. FIG. 4 is drawn by using an example in which the operation circuit 403 includes 4*5 operation units 4031, that is, X is equal to 4, and Y is equal to 5. The operation unit 403 includes two inputs, respectively receiving the left matrix A sent by the first memory 401 and the right matrix B sent by the second memory 402, and performs a vector multiplication operation on a row vector of the left matrix A and a column vector of the right matrix B. Specifically, one operation unit 4031 includes a vector multiplication circuit and an addition circuit. The multiplication circuit is configured to complete a point multiplication operation on a corresponding element in a row vector and a corresponding element in a column vector. The addition circuit is configured to accumulate point multiplication results to obtain a vector multiplication result outputted by each operation unit.

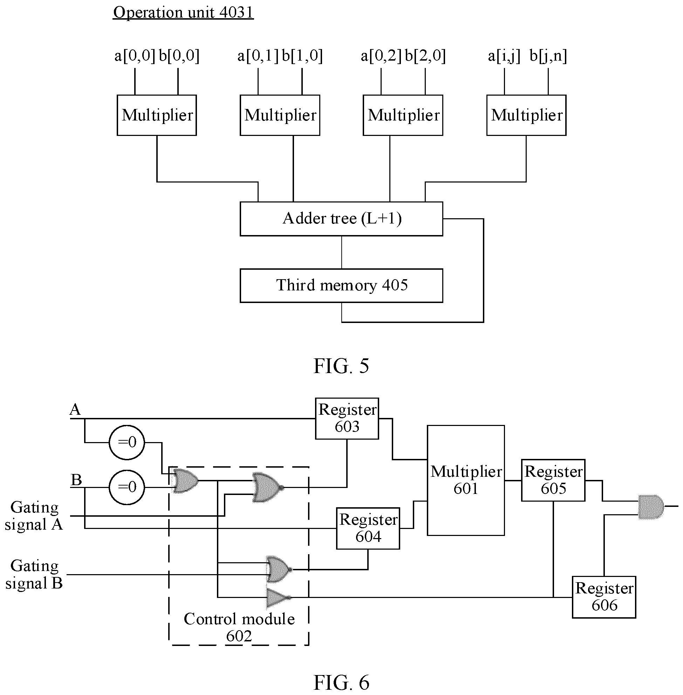

FIG. 5 is a schematic diagram of a structure of an operation unit 4031 according to an embodiment of this application. In a possible implementation, one operation unit includes L multipliers (L=4 in the figure), and an addition circuit in the operation unit 4031 is a multiplication and accumulation unit. The multiplication and accumulation unit includes an adder tree whose input port is (L+1) and a third memory 405. The adder tree is used to accumulate L point multiplication results, to obtain calculation results of the operation unit in different clock cycles. The third memory 405 is configured to store an operation result of the operation unit in each clock cycle. The third memory 405 includes a plurality of storage units. Each operation unit has a specified storage unit, configured to store an operation result of each operation.

To reduce power consumption of the operation unit, in embodiments of this application, a hardware structure of the operation unit 4031 is improved based on the operation unit 4031 shown in FIG. 5. FIG. 6 is a schematic diagram of a structure of an operation unit according to an embodiment of this application. The operation unit includes a multiplier 601, an input end of the multiplier 601 is connected to a control module 602, and the control module 602 includes a gate circuit. An input end A is connected to a register 603, and the register 603 is configured to temporarily store a specific element in a row vector. An input end B is also connected to the multiplier 601 through a register 604, and the register 604 is configured to temporarily store a specific element in a column vector. An output end of the multiplier 601 includes a register 605, and the register 605 is configured to temporarily store an output result of the multiplier. The registers 603, 604, and 605 are all controlled by clock gating.

Based on the operation unit shown in FIG. 6, when one of elements corresponding to the row vector and the column vector is 0, in other words, when a matrix element 0 is input to one of two input ends of the multiplier, a first gating signal may be generated through an OR gate circuit. The gating signal may disable the register 603 under a gating condition A, so that an element inputted at the input end A is not written into the register 603. In addition, the gating signal disables the register 604 under a gating condition B, so that an element input at the input end B is not written into the register 604. In this way, the multiplier does not perform subsequent calculation, but maintains a calculation result of a previous round. In addition, the first gating signal may disable the register 605, and change data in the register 605 into invalid data. Then, the input end may obtain a second gating signal through a NOT gate, write a calculation result 0 into a register 606 based on the second gating signal, and finally obtain a final output result 0 by using data in the register 605 and the register 606 through an AND gate.

It can be learned from the foregoing example that because a product of the element 0 and any number is 0, if the control module 602 is not added, the registers 603 and 604 input data to the multiplier 601 without any difference. In other words, the registers 603 and 604 are refreshed to 0. If an element in a previous round of register is not 0, a state of the register is flipped. Then, the multiplier 601 further needs to perform a multiplication operation as usual, and a flip also occurs. This causes a large amount of power consumption. However, after the control module 602 is added, as long as one of input values is 0, the registers 603, 604, and 605 are not refreshed, and the multiplier 601 does not work, but directly outputs a calculation result 0. The register and the multiplier are refreshed according to a normal process only when input values are not 0. In this way, power consumption of the register and the multiplier is greatly reduced, thereby reducing power consumption of the entire operation unit, and improving operation performance of the entire matrix multiplier.

The following describes in detail how the controller 404 controls a matrix multiplication operation of the matrix multiplier:

(1) Split a matrix to obtain fractal matrices.

Because a matrix operation is limited by a quantity of operation units 4031 included in the matrix multiplier, when sizes of two matrices for matrix multiplication are large, the original matrices need to be split to obtain fractal matrices (submatrices), then a multiplication operation between the fractal matrices is sequentially performed by using the fractal matrices as a whole to obtain an intermediate matrix, and finally accumulation is performed based on positions of the fractal matrices to obtain a final result.

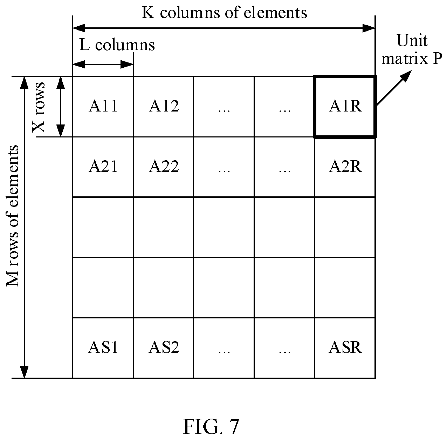

A fractal matrix refers to a unit matrix obtained by dividing an original matrix based on a specific size along a row direction and a column direction. A left matrix is used as an example. As shown in FIG. 7, a left matrix A is an M*K matrix. In other words, the left matrix A includes M rows and K columns of elements. To enable the left matrix A to adapt to a size of a matrix multiplier (where the matrix multiplier includes X rows and Y columns of operation units), it may be determined that a quantity of rows of a unit matrix P is X. Because each operation unit includes L multipliers, and point multiplication of L elements can be implemented in one clock cycle, it may be determined that a quantity of columns of the unit matrix P is L. In other words, a size of the unit matrix P is X*L. In this way, the left matrix A may be divided into a plurality of fractal matrices along a row direction and a column direction, and a size of each fractal matrix is X*L.

The controller 404 splits the left matrix A to obtain S*R fractal matrices. In the S*R fractal matrices, a fractal matrix in an $s^{th}$ row and an $r^{th}$ column may be marked as $A_{sr}$, and a value of s is any positive integer ranging from 1 to S, and a value of r is any positive integer ranging from 1 to R. In this embodiment of this application, an objective of fractalizing a matrix is to split a large matrix into a plurality of small matrices that meet the size of the matrix multiplier, perform fractal matrix multiplication by using the small matrices as a unit to obtain intermediate value matrices, and then perform accumulation and sorting on the intermediate value matrices in a specific order to finally obtain a multiplication result of the large matrix. In this way, calculation can be flexibly performed. This facilitates subsequent reuse and multi-level caching, further improves calculation efficiency, and reduces data transfer bandwidth and energy consumption.

When the left matrix A (M*K) is divided, there may be a case in which the left matrix A (M*K) cannot be exactly divided by an X*L unit matrix P into an integer. In other words, MIX or K/L is not an integer. In this case, an element of O may be used to fill in a fractal matrix $A_{sr}$ to perform a supplement operation. For example, a size of the left matrix A is 9*13, and a size of a unit matrix is 3*4 columns. When fractalization is performed on the left matrix A, there are remaining elements in a 13th column of the left matrix A, and three fractal matrices A13, A23, and A33 still need to be obtained based on the elements in the 13th column. It may be understood that elements in the first column of the three fractal matrices are elements in the 13th column of elements of the left matrix A, and elements in the second column, the third column, and the fourth column are all O. Alternatively, the elements may not be supplemented, but directly does not participate in an operation, and an operation result is assigned to 0. In this way, power consumption of reading and operation of the operation unit can be reduced.

It may be understood that a method for dividing a right matrix is similar to that for dividing the left matrix. Because a right matrix B is inputted to the matrix multiplier in the column direction, and a size of the right matrix is K*N, it may be determined that a size of a unit matrix Q corresponding to the right matrix is L*Y. In this way, the right matrix B may be divided into a plurality of fractal matrices along the row direction and the column direction, and a size of each fractal matrix B is L*Y. The controller 404 splits the right matrix B to obtain R*T fractal matrices. In the R*T fractal matrices, a fractal matrix in an $r^{th}$ row and a $t^{th}$ column may be marked as $B_{rt}$. A value of r is any positive integer ranging from 1 to R, and a value of t is any positive integer ranging from 1 to T.

It should be noted that when the right matrix is divided, there may alternatively be a case in which the right matrix cannot be exactly divided by an L*Y unit matrix into an integer. In other words, K/L or N/Y is not an integer. Similarly, an element of O may also be used to fill a fractal matrix $B_{rt}$ to perform a supplement operation, or elements are not supplemented, but directly does not participate in an operation, and an operation result is assigned to 0.

After the left matrix and the right matrix are separately fractalized, fractal matrices may be inputted into the operation circuit 403 to perform a matrix multiplication operation between the fractal matrices. In a specific calculation process, the controller 404 may first select any fractal matrix $A_{sr}$ (X*L) in the left matrix A, and then input all X row vectors included in $A_{sr}$ into the operation unit 4031. In other words, the first row vector in $A_{sr}$ may be inputted into the first row of operation units 4031, and an $i^{th}$ row vector in $A_{sr}$ is inputted to an $i^{th}$ row of operation units 4031, where a value of i is sequentially selected from 1 to X. Then, a fractal matrix $B_{rt}$ (L*Y) of a right matrix B corresponding to $A_{sr}$ is also inputted into the operation unit 4031. In other words, an $i^{th}$ column vector in $B_{rt}$ may be inputted into an $i^{th}$ column of operation units 4031, where a value of i is sequentially selected from 1 to Y In $A_{sr}$ and $B_{rt}$ input to the operation units at the same time, values of r are the same. In this way, in an operation cycle, an intermediate result matrix obtained after two fractal matrices are multiplied may be obtained. The operation cycle is time required by the operation unit to complete a multiplication operation of the two fractal matrices, and the operation unit includes a multiplier and a multiplication and accumulation unit.

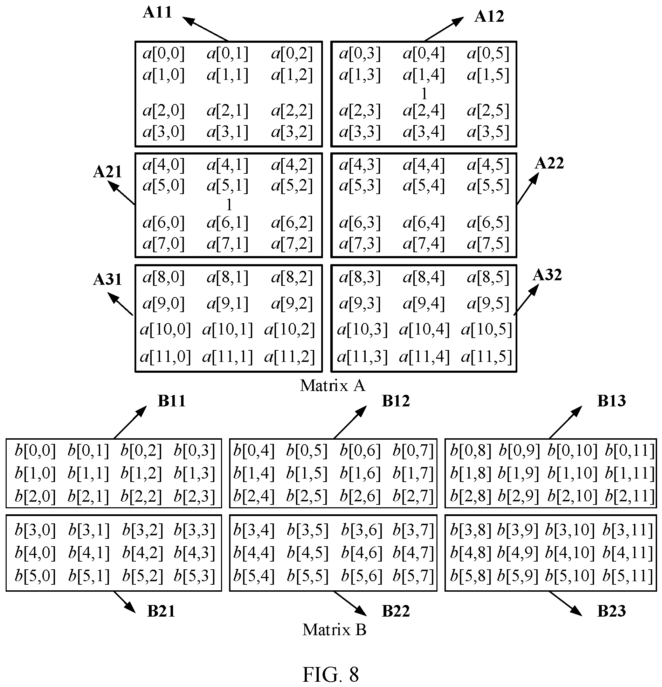

FIG. 8 provides a schematic diagram of a fractal matrix. A size of a left matrix A is M*K, and a size of a right matrix B is K*N. If M is equal to 12, K is equal to 6, N is equal to 12, X is equal to 4, Y is equal to 4, and L is equal to 3, a fractal matrix A and a fractal matrix B may be obtained. The matrix A includes 3*2 fractal matrices (where $A_{sr}$ is, for example, A11, A12, A21, A22, A31, and A32), each fractal matrix is a 4*3 matrix. The matrix B includes 2*3 fractal matrices (where $B_{rt}$ is, for example, B11, B12, B13, B21, B22, and B23), and each fractal matrix is a 3*4 matrix.

In this way, a result of multiplying the matrix A by the matrix B may be converted into a product of a fractal matrix of the matrix A and a fractal matrix of the matrix B, namely:

$$C=A*B=\begin{bmatrix} A11*B11+A12*B21 & A11*B12+A12*B22 & A11*B13+A12*B23 \\ A21*B11+A22*B21 & A21*B12+A22*B21 & A21*B13+A22*B23 \\ A31*B11+A32*B21 & A31*B12+A32*B21 & A31*B13+A32*B23 \end{bmatrix}$$

(2) Determine a calculation order of the fractal matrix:

Based on the foregoing fractal matrix multiplication operation formula, for a specific fractal matrix, a matrix multiplication operation needs to be performed on the fractal matrix and a plurality of fractal matrices. However, the operation circuit 403 can perform a multiplication operation on only two fractal matrices in an operation cycle of each matrix. Therefore, an order of fractal matrices inputted to the operation circuit 403 needs to be determined. For example, in the foregoing example, for a result matrix C obtained by multiplying the matrix A by the matrix B, the first element C11 in the first row of the result matrix C is equal to A11*B 11+A12*B21. In other words, to obtain the first element, a matrix multiplication result of the left fractal matrix A11 and the right fractal matrix B11 needs to be obtained first, then a matrix multiplication result of the left fractal matrix A12 and the right fractal matrix B21 needs to be obtained, and finally the two matrix multiplication results are added. In this case, the controller 404 may control, in a first operation cycle, the operation circuit 403 to obtain data of the fractal matrix A11 from the first memory 401, and control the operation circuit 403 to obtain data of the fractal matrix B 11 from the second memory 402, and then the operation circuit 403 obtains an operation result of A11*B11. The operation result is a multiplication result of the two fractal matrices. Then the controller needs to control the operation circuit to store the operation result in a multiplication result accumulation unit of the matrix multiplier. The multiplication result accumulation unit is configured to accumulate a plurality of matrix multiplication results obtained by multiplying fractional matrices. Then, the controller 404 controls, in a second operation cycle, the operation circuit 403 to obtain data of the fractal matrix A12 from the first memory 401, and controls the operation circuit 403 to obtain data of the fractal matrix B21 from the second memory 402, so that the operation circuit 403 calculates an operation result of A12*B21 in the second operation cycle, and inputs the operation result to the foregoing multiplication result accumulation unit. In addition, the multiplication result accumulation unit needs to immediately accumulate the operation result of A12*B21 and the operation result of A11*B 11 that is obtained in a previous round, to obtain an intermediate accumulation result. The operation cycle is time used by the operation circuit 403 to complete a multiplication operation between two fractal matrices.

If the controller 404 performs a multiplication operation on fractal matrices based on a matrix multiplication order, the first memory 401 and the second memory 402 need to write new data in each matrix operation cycle. In other words, state flips occur in the first memory 401 and the second memory 402 in each matrix operation cycle. This causes great power consumption of the memory. In addition, an accumulation cycle of the multiplication result accumulation unit also has only one matrix operation cycle. In other words, an operation result of a previous cycle is an accumulation value of a next cycle, and the matrix multiplier is required to implement a single-cycle accumulation operation. Because the single-cycle accumulation operation means that more parallel circuit processing needs to be supported for a floating-point operation, the costs and design difficulty of the matrix multiplier are greatly increased. Therefore, a technical problem to be resolved in embodiments of this application is how to reduce read power consumption of a memory and avoid a single-cycle accumulation operation of a multiplication result accumulation unit, that is, prolong an accumulation operation cycle of the multiplication result accumulation unit.

In this embodiment of this application, the controller 404 may reuse a fractal matrix based on a specific rule. For example, after controlling the first memory 401 to read a specific fractal matrix $A_{sr}$ of a left matrix, the controller 404 may reuse the fractal matrix $A_{sr}$ in a plurality of matrix operation cycles. In other words, the fractal matrix $A_{sr}$ in the operation circuit 403 is kept unchanged in a plurality of consecutive matrix operation cycles, and then a fractal matrix of a right matrix in the second memory 402 is changed. Multiplication of the fractal matrix $A_{sr}$ and fractal matrices of a plurality of right matrices is completed, and an obtained multiplication result matrix is first stored in the multiplication result accumulation unit. After a plurality of matrix operation cycles, the multiplication result accumulation unit performs an accumulation operation. In this way, the first memory 401 may not refresh data in a plurality of operation cycles, thereby greatly reducing power consumption of reading the fractal matrix. In addition, the multiplication result accumulation unit does not need to perform single-cycle accumulation, which reduces the design difficulty of the matrix multiplier.

The following describes in detail an operation order of a fractal matrix in this embodiment of this application with reference to different scenarios.

A fractal matrix $A_{sr}$ of a left matrix is reused:

A quantity T of columns of a fractal matrix of a right matrix can be exactly divided by a quantity n of reuse times, namely, Ceil(N/Y)%n=0.

The controller first determines to reuse the fractal matrix $A_{sr}$ of the left matrix stored in the first memory 401, and then determines the quantity of reuse times based on a hardware structure of the matrix multiplier. The quantity of reuse times determines an accumulation cycle of the multiplication result accumulation unit. It may be understood that the multiplication result accumulation cycle is the matrix operation cycle multiplied by the quantity n of reuse times.

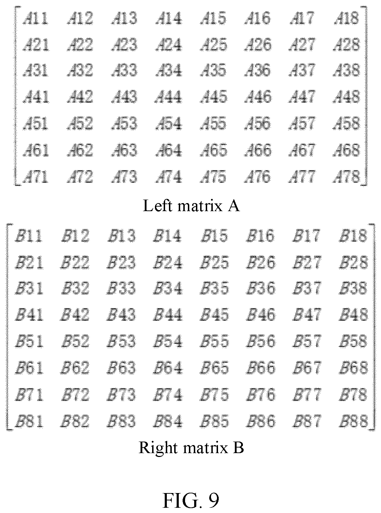

FIG. 9 is a schematic diagram of a left matrix A and a right matrix B according to an embodiment of this application. As shown in the figure, the matrix A includes 7*8 fractal matrices, and the matrix B includes 8*8 fractal matrices. It may be obtained according to a matrix operation formula that point multiplication needs to be separately performed on a fractal matrix A11 and all fractal matrices B1t (where values of t are sequentially 1 to T) in the first row of the matrix B, and point multiplication needs to be separately performed on a fractal matrix A12 and all fractal matrices B2t (where values of t are sequentially 1 to T) in the first row of the matrix B. In other words, matrix multiplication needs to be separately performed on a fractal matrix $A_{sr}$ in an $r^{th}$ column of the left matrix and a fractal matrix $B_{rt}$ in an $r^{th}$ row of the right matrix. Therefore, when the fractal matrix $A_{sr}$ is reused, it needs to be determined whether a quantity T of columns of the fractal matrix of the right matrix can be exactly divided by a quantity n of reuse times. If the quantity T of columns of the fractal matrix of the right matrix can be exactly divided by the quantity n of reuse times, reuse is directly performed on $A_{sr}$ based on the quantity of reuse times.

For example, in FIG. 9, if the quantity of reuse times is 4, and the quantity T of columns of the fractal matrix of the right matrix is 8, and can be exactly divided by the quantity of reuse times, in a first matrix operation cycle, the controller 404 controls the first memory 401 to read the fractal matrix A11, controls the second memory 402 to read a fractal matrix B 11, and separately inputs a row vector of the fractal matrix A11 and a column vector of the fractal matrix B11 to the operation circuit 403, to complete A11*B11.

In a second matrix operation cycle, the controller 404 controls the fractal matrix A11 in the first memory 401 to remain unchanged, controls the second memory 402 to read a fractal matrix B 12, and separately inputs the row vector of the fractal matrix A11 and a column vector of the fractal matrix B 12 to the operation circuit 403, to complete A11*B12.

In a third matrix operation cycle, the controller 404 controls the fractal matrix A11 in the first memory 401 to remain unchanged, controls the second memory 402 to read a fractal matrix B 13, and separately inputs the row vector of the fractal matrix A11 and a column vector of the fractal matrix B 13 to the operation circuit 403, to complete A11*B13.

In a fourth matrix operation cycle, the controller 404 controls the fractal matrix A11 in the first memory 401 to remain unchanged, controls the second memory 402 to read a fractal matrix B 14, and separately inputs the row vector of the fractal matrix A11 and a column vector of the fractal matrix B14 to the operation circuit 403, to complete A11*B14.

In a fifth matrix operation cycle, because the quantity of reuse times of the fractal matrix A11 reaches four, the controller 404 needs to refresh data in the first memory 401, controls the first memory 401 to read the fractal matrix A12, controls the second memory 402 to read a fractal matrix B21, and separately inputs a row vector of the fractal matrix A12 and a column vector of the fractal matrix B21 to the operation circuit 403, to complete A12*B21. In addition, in the fifth cycle, accumulation of A11*B 11 and A12*B21 needs to be completed according to the matrix multiplication operation formula. In this way, after a previous accumulated value is obtained, a corresponding multiplication result accumulation unit performs accumulation once after four matrix operation cycles.

By analogy, in a sixth cycle, a seventh cycle, and an eighth cycle, the controller 404 needs to keep the fractal matrix A12 in the first memory 401 unchanged, controls the second memory 402 to sequentially read fractal matrices B22, B23, and B24, and separately inputs the row vector of the fractal matrix A21 and column vectors of the fractal matrices B22, B23, and B24 to the operation circuit 403, to complete a multiplication operation of a corresponding fractal matrix, and separately complete an accumulation operation.

By analogy, the controller 404 may sequentially input a to-be-reused fractal matrix $A_{sr}$ along a row direction of the matrix A, and then input a second row of fractal matrix $A_{2r}$ after calculating a first row of fractal matrix $A_{1r}$. In other words, when controlling the first memory 401 to read a fractal matrix, the controller 404 may first determine that a value of s in $A_{sr}$ remains unchanged, sequentially increase a value of r, and then sequentially increase a value of s.

After the controller 404 completes reuse of the last fractal matrix A78, in other words, when A78*B84 is calculated, reuse needs to be performed again from A11, and A11*B15 to A11*B18 are separately calculated to complete all fractal multiplication of the fractal matrix A11. By analogy, all fractal matrix multiplication of A12 and B25 to B28 is performed again until all fractal matrix multiplication of A78 and B85 to B88 is completed. Finally, a multiplication operation of the matrix A and the matrix B is completed. To more intuitively display a reuse case of a fractal matrix, in the foregoing application scenarios, data transfer steps may be shown in Table 1.

**Table 1**

| Matrix operation cycle | First memory | Second memory | Calculation |
|---|---|---|---|
| 1 | A11 | B11 | A11*B11 |
| 2 | | B12 | A11*B12 |
| 3 | | B13 | A11*B13 |
| 4 | | B14 | A11*B13 |
| 5 | A12 | B21 | A12*B21, A11*B11+A12*B21 |
| 6 | | B22 | A12*B22, A11*B12+A12*B22 |
| ... | ... | ... | ... |
| ... | A18 | B84 | A18*B84, ... |
| ... | A21 | B11 | A21*B11 |
| ... | ... | ... | ... |
| ... | A11 | B15 | A11*B15 |
| ... | A11 | B16 | A11*B16 |
| ... | ... | ... | ... |
| ... | A78 | B88 | A78*B88, ... |

2. A quantity T of columns of a fractal matrix of a right matrix cannot be exactly divided by a quantity n of reuse times, and a remainder is greater than or equal to 2, namely, Ceil(N/Y)%n≥2.

When the quantity T of columns of the fractal matrix cannot be exactly divided by the quantity n of reuse times, after matrix multiplication is completed between all fractal matrices of a left matrix and n columns of fractal matrices of the right matrix, all fractal matrices of the left matrix further need to be multiplied with remaining several columns of the fractal matrix of the right matrix. In this case, the quantity of reuse times may be adjusted based on the quantity of remaining columns of the fractal matrix of the right matrix.

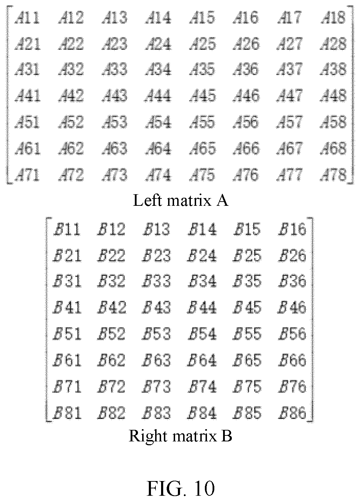

FIG. 10 is a schematic diagram of another left matrix A and another right matrix B according to an embodiment of this application. As shown in the figure, the matrix A includes 7*8 fractal matrices, and the matrix B includes 8*6 fractal matrices. In other words, T is equal to 6. It may be obtained according to a matrix operation formula that matrix multiplication needs to be separately performed on a fractal matrix A11 and all fractal matrices B1t (where values of t are sequentially 1 to T) in the first row of the matrix B, and matrix multiplication needs to be separately performed on a fractal matrix A12 and all fractal matrices B2t (where values of t are sequentially 1 to T) in the first row of the matrix B. In other words, point multiplication needs to be separately performed on a fractal matrix $A_{sr}$ in an $r^{th}$ column of the left matrix and a fractal matrix $B_{rt}$ in an $r^{th}$ row of the right matrix. Therefore, when the fractal matrix $A_{sr}$ is reused, it needs to be determined whether a quantity n of reuse times can be exactly divided by the quantity T of columns of the fractal matrix of the right matrix. If T cannot be exactly divided by the quantity of reuse times that is 4, the quantity of reuse times of $A_{sr}$ needs to be first determined as 4. After a multiplication operation of four columns of fractal matrices is completed, the quantity of reuse times of $A_{sr}$ is determined as 2, and multiplication of $A_{sr}$ with the last two columns of right fractal matrices is completed.

For example, in FIG. 10, it is first determined that the quantity of reuse times is 4. In this case, in a first matrix operation cycle, the controller 404 controls the first memory 401 to read the fractal matrix A11, controls the second memory 402 to read a fractal matrix B11, and separately inputs a row vector of the fractal matrix A11 and a column vector of the fractal matrix B11 to the operation circuit 403, to complete A11*B11.

Refer to the foregoing embodiment. The controller 404 controls, in a second cycle, a third cycle, and a fourth cycle, the fractal matrix A11 in the first memory 401 to remain unchanged, controls the second memory 402 to separately read fractal matrices B12, B13, and B14, and separately inputs a row vector of a corresponding left fractal matrix and a column vector of a corresponding right fractal matrix of the fractal matrix to the operation circuit 403, to complete A11*B12, A11*B13, and A11*B14.

In a fifth matrix operation cycle, because the quantity of reuse times of the fractal matrix A11 reaches four, the controller 404 needs to refresh data in the first memory 401, controls the first memory 401 to read the fractal matrix A12, controls the second memory 402 to read a fractal matrix B21, and separately inputs a row vector of the fractal matrix A12 and a column vector of the fractal matrix B21 to the operation circuit 403, to complete A12*B21.

In addition, in the fifth cycle, accumulation of A11 *B11 and A12*B21 needs to be completed according to the matrix multiplication operation formula. In this way, after a previous accumulated value is obtained, a corresponding accumulation unit performs accumulation once after four matrix operation cycles.

By analogy, in a sixth cycle, a seventh cycle, and an eighth cycle, the controller 404 needs to keep the fractal matrix A12 in the first memory 401 unchanged, controls the second memory 402 to sequentially read fractal matrices B22, B23, and B24, and separately inputs a row vector of a fractal matrix A21 and column vectors of the fractal matrices B22, B23, and B24 to the operation circuit 403, to complete a multiplication operation of a corresponding fractal matrix, and separately complete an accumulation operation.

By analogy, the controller 404 may sequentially input a to-be-reused fractal matrix $A_{sr}$ first along a row direction of the matrix A, and then input a second row of fractal matrix $A_{2r}$ after calculating a first row of fractal matrix $A_{1r}$. In other words, when controlling the first memory 401 to read a fractal matrix, the controller 404 may first determine that a value of s in $A_{sr}$ remains unchanged, sequentially increase a value of r, and then sequentially increase a value of s.

After the controller 404 completes four times of reuse of the last fractal matrix A78, the left matrix further needs to be multiplied and accumulated with remaining fractal matrices $B_{rt}$ (t=5 or t=6) of two rows of right matrices. In this case, the controller 404 controls the first memory 401 to read fractal matrix data from A11 again, and modifies the quantity n of reuse times to 2. In other words, the controller 404 controls A11 and B15 to perform matrix multiplication in a matrix operation cycle. It needs to be determined that A11 remains unchanged in a next matrix operation cycle, and a matrix multiplication operation of A11 and B15 is completed. Then, in the next matrix operation cycle, the first memory 401 is controlled to read A12, and A12 is controlled to be multiplied by B25. In addition, a multiplication result accumulation unit completes accumulation of A11*B15 and A12*B25 in the cycle.

It can be seen from descriptions of the foregoing operation process that when the left fractal matrix is multiplied by the last two columns of right fractal, an accumulation cycle becomes two matrix operation cycles. In this case, corresponding last two columns of right fractal accumulation units are not accumulated in a single cycle, and therefore, power consumption of the multiplication result accumulation unit is reduced. To more intuitively display a reuse case of a fractal matrix, in the foregoing application scenarios, data transfer steps may be shown in Table 2.

**Table 2**

| Matrix operation cycle | First memory | Second memory | Calculation |
|---|---|---|---|
| 1 | A11 | B11 | A11*B11 |
| 2 | | B12 | A11*B12 |
| 3 | | B13 | A11*B13 |
| 4 | | B14 | A11*B13 |
| 5 | A12 | B21 | A12*B21, A11*B11+A12*B21 |
| 6 | | B22 | A12*B22, A11*B12+A12*B22 |
| ... | ... | ... | ... |
| ... | A18 | B84 | A18*B84, ... |
| ... | A21 | B11 | A21*B11 |
| ... | ... | ... | ... |
| ... | A11 | B15 | A11*B15 |
| ... | A11 | B16 | A11*B16 |
| ... | A12 | B25 | A12*B25, A11*B15+A12*B25 |
| ... | A12 | B26 | A12*B26, A11*B15+A12*B26 |
| ... | ... | ... | ... |
| ... | A78 | B86 | A78*B86, ... |

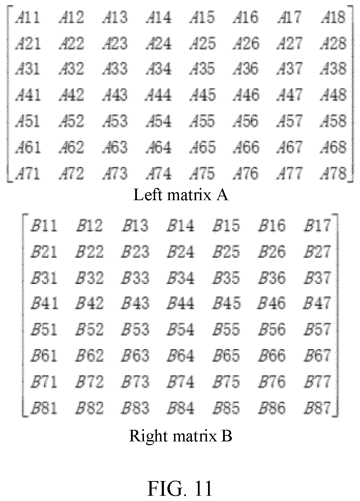

For example, FIG. 11 is a schematic diagram of another left matrix A and another right matrix B according to an embodiment of this application. Different from the embodiment shown in FIG. 10, in FIG. 11, the matrix A includes 7*8 fractal matrices, and the matrix B includes 8*7 fractal matrices. In other words, T is equal to 7. However, T cannot be exactly divided by a quantity of reuse times that is 4 and a remainder is 3. In this case, the quantity of reuse times of $A_{sr}$ may be first determined as 4. After a multiplication operation of four columns of fractal matrices is completed, the quantity of reuse times of $A_{sr}$ is determined as 3, and multiplication of $A_{sr}$ with the last three columns of right fractal matrices is completed. In other words, the quantity of reuse times of the left fractal matrix changes only when the quantity of reuse times of the left fractal matrix is multiplied by the remaining last columns of right fractal matrices, and a redetermined quantity of reuse times is the remainder.

For example, in FIG. 11, it is first determined that the quantity of reuse times is 4. In this case, in a first matrix operation cycle, the controller 404 controls the first memory 401 to read the fractal matrix A11, controls the second memory 402 to read a fractal matrix B11, and separately inputs a row vector of the fractal matrix A11 and a column vector of the fractal matrix B11 to the operation circuit 403, to complete A11*B11.

Refer to the foregoing embodiment. The controller 404 controls, in a second cycle, a third cycle, and a fourth cycle, the fractal matrix A11 in the first memory 401 to remain unchanged, controls the second memory 402 to separately read fractal matrices B12, B13, and B14, and separately inputs a row vector of a corresponding left fractal matrix and a column vector of a corresponding right fractal matrix of the fractal matrix to the operation circuit 403, to complete A11*B12, A11*B13, and A11*B14.

In a fifth matrix operation cycle, because the quantity of reuse times of the fractal matrix A11 reaches four, the controller 404 needs to refresh data in the first memory 401, controls the first memory 401 to read the fractal matrix A12, controls the second memory 402 to read a fractal matrix B21, and separately inputs a row vector of the fractal matrix A12 and a column vector of the fractal matrix B21 to the operation circuit 403, to complete A12*B21.

In addition, in the fifth cycle, accumulation of A11*B 11 and A12 *B21 needs to be completed according to the matrix multiplication operation formula. In this way, after a previous accumulated value is obtained, a corresponding accumulation unit performs accumulation once after four matrix operation cycles.

By analogy, in a sixth cycle, a seventh cycle, and an eighth cycle, the controller 404 needs to keep the fractal matrix A12 in the first memory 401 unchanged, controls the second memory 402 to sequentially read fractal matrices B22, B23, and B24, and separately input the row vector of the fractal matrix A21 and column vectors of the fractal matrices B22, B23, and B24 to the operation circuit 403, to complete a multiplication operation of a corresponding fractal matrix, and separately complete a multiplication result accumulation operation.

By analogy, the controller 404 may sequentially input a to-be-reused fractal matrix $A_{sr}$ first along a row direction of the matrix A, and then input a second row of fractal matrix $A_{2r}$ after calculating a first row of fractal matrix $A_{1r}$. In other words, when controlling the first memory 401 to read a fractal matrix, the controller 404 may first determine that a value of s in $A_{sr}$ remains unchanged, sequentially increase a value of r, and then sequentially increase a value of s.

After the controller 404 completes four times of reuse of the last fractal matrix A78, the left matrix further needs to be multiplied and accumulated with remaining fractal matrices $B_{rt}$ (t=5, t=6, or t=7) of three rows of right matrices. In this case, the controller 404 controls the first memory 401 to read fractal matrix data from A11 again, and modifies the quantity n of reuse times to 3. In other words, the controller 404 controls A11 and B15 to perform matrix multiplication in a matrix operation cycle. It needs to be determined that A11 remains unchanged in a next matrix operation cycle, and a matrix multiplication operation of A11 and B 16 is completed. Then, it is determined that A11 remains unchanged in a next matrix operation cycle, and a matrix multiplication operation of A11 and B 17 is completed. Then, in the next matrix operation cycle, the first memory 401 is controlled to read A12, and A12 is controlled to be multiplied by B25. In addition, an accumulation unit completes accumulation of A11*B15 and A12*B25 in the cycle.

It can be seen from descriptions of the foregoing operation process that when the left fractal matrix is multiplied by the last two columns of right fractal, an accumulation cycle becomes three matrix operation cycles. In this case, corresponding last two columns of right fractal accumulation units are not accumulated in a single cycle, and therefore, power consumption of the accumulation unit is reduced. To more intuitively display a reuse case of a fractal matrix, in the foregoing application scenarios, data transfer steps may be shown in Table 3.

**Table 3**

| Matrix operation cycle | First memory | Second memory | Calculation |
| --- | --- | --- | --- |
| 1 | A11 | B11 | A11*B11 |
| 2 | | B12 | A11*B12 |
| 3 | | B13 | A11*B13 |
| 4 | | B14 | A11*B13 |
| 5 | A12 | B21 | A12*B21, A11*B11+A12*B21 |
| 6 | | B22 | A12*B22, A11*B12+A12*B22 |
| ... | ... | ... | ... |
| ... | A18 | B84 | A18*B84, ... |
| ... | A21 | B11 | A21*B11 |
| ... | ... | ... | ... |
| ... | A11 | B15 | A11*B15 |
| ... | A11 | B16 | A11*B16 |
| ... | A11 | B17 | A11*B17 |
| ... | A12 | B25 | A12*B25, A11*B15+A12*B25 |
| ... | A12 | B26 | A12*B26, A11*B16+A12*B26 |
| ... | A12 | B27 | A12*B27, A11*B17+A12*B27 |
| ... | ... | ... | ... |
| ... | A78 | B87 | A78*B87, ... |

3. A quantity T of columns of a fractal matrix of a right matrix cannot be exactly divided by a quantity n of reuse times, and a remainder is equal to 1, namely, Ceil(N/Y)%n=1.

According to the foregoing descriptions, there is a special scenario. That is, after T is divided by n, a remainder is 1, in other words, only one column of right fractal matrices is left. If reuse is performed based on the quantity of reuse times, when the left fractal matrix is multiplied by the last column of right fractal matrices, the multiplication result accumulation unit needs to perform single-cycle accumulation. In this case, more parallel units are required to support running of the multiplication result accumulation unit. To avoid that the multiplication result accumulation unit needs to perform single-cycle accumulation, the quantity n of reuse times may be adjusted. In other words, the quantity of reuse times may be adjusted when the left fractal matrix is multiplied by the last (n+1) columns of right fractal matrices, to ensure that the quantity of reuse times is not less than 2.

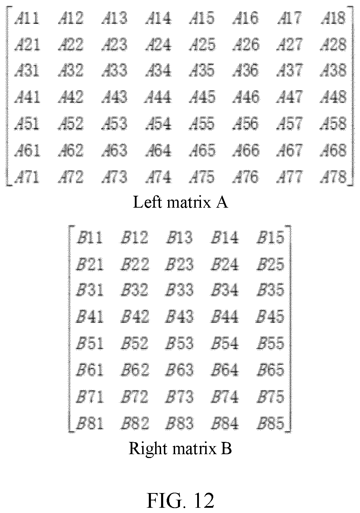

For example, FIG. 12 is a schematic diagram of another left matrix A and another right matrix B according to an embodiment of this application. As shown in the figure, the matrix A includes 7*8 fractal matrices, and the matrix B includes 8*5 fractal matrices. In other words, T is equal to 5. T cannot be exactly divided by a quantity of reuse times that is 4, and a remainder is 1. To avoid a case in which an accumulation unit needs to perform single-cycle accumulation, the quantity of reuse times of $A_{sr}$ may be determined as 3. After a multiplication operation of three columns of fractal matrices is completed, it is determined that the quantity of reuse times of $A_{sr}$ is 2, and multiplication of $A_{sr}$ and the last two columns of right fractal matrices is completed.

In a first matrix operation cycle, the controller 404 controls the first memory 401 to read the fractal matrix A11, controls the second memory 402 to read a fractal matrix B11, and separately inputs a row vector of the fractal matrix A11 and a column vector of the fractal matrix B11 to the operation circuit 403, to complete A11*B11.

Refer to the foregoing embodiment. The controller 404 controls, in a second cycle and a third cycle, the fractal matrix A11 in the first memory 401 to remain unchanged, controls the second memory 402 to separately read fractal matrices B 12 and B 13, and separately inputs a row vector of a corresponding left fractal matrix and a column vector of a corresponding right fractal matrix to the operation circuit 403, to complete A11*B12, and A11*B13.

In a fourth matrix operation cycle, because the quantity of reuse times of the fractal matrix A11 reaches three, the controller 404 needs to refresh data in the first memory 401, controls the first memory 401 to read the fractal matrix A12, controls the second memory 402 to read a fractal matrix B21, and separately inputs a row vector of the fractal matrix A12 and a column vector of the fractal matrix B21 to the operation circuit 403, to complete A12*B21.

In addition, in the fourth cycle, accumulation of A11*B 11 and A12*B21 needs to be completed according to the matrix multiplication operation formula. In this way, after a previous accumulated value is obtained, a corresponding accumulation unit performs accumulation once after three matrix operation cycles.

By analogy, in a sixth cycle and a seventh cycle, the controller 404 needs to keep the fractal matrix A12 in the first memory 401 unchanged, controls the second memory 402 to sequentially read fractal matrices B22 and B23, and separately inputs the row vector of the fractal matrix A21 and column vectors of the fractal matrices B22 and B23 to the operation circuit 403, to complete a multiplication operation of a corresponding fractal matrix, and separately complete an accumulation operation.

By analogy, the controller 404 may sequentially input a to-be-reused fractal matrix $A_{sr}$ first along a row direction of the matrix A, and then input a second row of fractal matrix $A_{2r}$ after calculating a first row of fractal matrix $A_{1r}$. In other words, when controlling the first memory 401 to read a fractal matrix, the controller 404 may first determine that a value of s in $A_{sr}$ remains unchanged, sequentially increase a value of r, and then sequentially increase a value of s.

After the controller 404 completes three times of reuse of the last fractal matrix A78, the left matrix further needs to be multiplied and accumulated with remaining fractal matrices $B_{rt}$ (t=4 or t=5) of two rows of right matrices. In this case, the controller 404 controls the first memory 401 to read fractal matrix data from A11 again, and modifies the quantity n of reuse times to 2. In other words, the controller 404 controls A11 and B 14 to perform matrix multiplication in a matrix operation cycle. It needs to be determined that A11 remains unchanged in a next matrix operation cycle, and a matrix multiplication operation of A11 and B 15 is completed. Then, in the next matrix operation cycle, the first memory 401 is controlled to read A12, and A12 is controlled to be multiplied by B24. In addition, an accumulation unit completes accumulation of A11*B14 and A12*B24 in the cycle.

It can be seen from descriptions of the foregoing operation process that when the left fractal matrix is multiplied by the last two columns of right fractal, an accumulation cycle changes from three matrix operation cycles to two matrix operation cycles. The multiplication result accumulation unit does not perform single-cycle accumulation, and therefore, power consumption of the accumulation unit is reduced. To more intuitively display a reuse case of a fractal matrix, in the foregoing application scenarios, data transfer steps may be shown in Table 4.

**Table 4**

| Matrix operation cycle | First memory | Second memory | Calculation |
|---|---|---|---|
| 1 | A11 | B11 | A11*B11 |
| 2 | | B12 | A11*B12 |
| 3 | | B13 | A11*B13 |
| 4 | A12 | B21 | A12*B21, A11*B11+A12*B21 |
| 5 | A12 | B22 | A12*B22, A11*B12+A12*B22 |
| ... | ... | ... | ... |
| ... | A18 | B83 | A18*B83, ... |

(continued)

| Matrix operation cycle | First memory | Second memory | Calculation |
|---|---|---|---|
| ... | A21 | B11 | A21*B11 |
| ... | ... | ... | ... |
| ... | A11 | B14 | A11*B14 |
| ... | A11 | B15 | A11*B15 |
| ... | A12 | B24 | A12*B24, A11*B14+A12*B24 |
| ... | A12 | B25 | A12*B25, A11*B15+A12*B25 |
| ... | ... | ... | ... |
| ... | A78 | B85 | A78*B85, ... |

(2) Reuse a fractal matrix $B_{rt}$ of a right matrix:

It may be understood that a server 404 may not only reuse a fractal matrix $A_{sr}$ of a left matrix read by the first memory 401, but also reuse the fractal matrix $B_{rt}$ of the right matrix. In other words, the controller 404 first determines a quantity n of reuse times. After the second memory 402 reads a specific fractal matrix $B_{rt}$, the controller 404 controls $B_{rt}$ in the second memory 402 to remain unchanged in n matrix operation cycles, and controls the first memory 401 to continuously read a fractal matrix $A_{sr}$ of a new left matrix in different matrix operation cycles. It may be understood that a principle of reusing the fractal matrix $B_{rt}$ of the right matrix is similar to that of reusing the fractal matrix $A_{sr}$ of the left matrix, and only reused objects are different.

It may be understood that there are a plurality of scenarios in which the fractal matrix $B_{rt}$ of the right matrix is reused. It can be seen from the matrix operation formula that the right fractal matrix $B_{rt}$ needs to be multiplied by the left fractal matrix $A_{sr}$, and values of r are the same, and values of s are set from 1 to S. In other words, each right fractal matrix needs to be multiplied by a column of left fractal matrices. Therefore, the scenarios in which the fractal matrix $B_{rt}$ of the right matrix is reused may be classified into the following cases:

1. A quantity S of rows of a fractal matrix of a left matrix can be exactly divided by a quantity n of reuse times, namely, Ceil(M/X)%n=0.
2. A quantity S of rows of a fractal matrix of a left matrix cannot be exactly divided by a quantity n of reuse times, and a remainder is greater than or equal to 2, namely, Ceil(M/X)%n≥2.
3. A quantity S of rows of a fractal matrix of a left matrix cannot be exactly divided by a quantity n of reuse times, and a remainder is equal to 1, namely, Ceil(M/X)%n=1.

If the quantity S of rows of the fractal matrix of the left matrix can be exactly divided by the quantity n of reuse times, the quantity n of reuse times remains unchanged. In other words, the second memory 402 sequentially reads a right fractal matrix $B_{rt}$, and keeps the fractal matrix unchanged in n matrix operation cycles each time reading the right fractal matrix. In an $(n+1)^{th}$ matrix operation cycle, data is refreshed once and a next right fractal matrix is read. The first memory 401 needs to read different left fractal matrices in each matrix operation cycle. First n rows of left fractal matrices may be sequentially first inputted, and then the last n rows of left fractal matrices are sequentially inputted after all right fractal matrices $B_{rt}$ are reused for n times. For a specific reuse process, refer to a case of left fractal matrix reuse. Details are not described here again.

If the quantity S of rows of the fractal matrix of the left matrix cannot be exactly divided by the quantity n of reuse times, and a remainder is greater than or equal to 2, the right fractal matrix may be first reused based on the quantity of reuse times. When there are remainder rows of left fractal matrices, the quantity of reuse times is changed to the quantity of remainder times. Because the remainder is greater than or equal to 2, a corresponding multiplication result accumulation unit does not need to perform single-cycle accumulation, thereby avoiding design of excessive parallel circuits. For a specific reuse process, refer to a case of left fractal matrix reuse. Details are not described here again.

If the quantity S of rows of the fractal matrix of the left matrix cannot be exactly divided by the quantity n of reuse times, and a remainder is equal to 1, and if the right fractal matrix is always reused based on the quantity of reuse times, there is only one row of remaining left fractal matrices at last. In this case, the quantity of reuse times needs to be adjusted to ensure that the quantity of rows of the remaining left fractal matrices is greater than or equal to 2. In this way, it can be ensured that the multiplication result accumulation unit does not need to perform single-cycle accumulation.

For a specific reuse process, refer to a case of left fractal matrix reuse. Details are not described here again.

It may be understood that in a special application scenario, that is, the left matrix includes only one row of fractal matrices, and the right matrix includes only one column of fractal matrices. In this case, the multiplication result accumulation unit definitely needs a single-cycle operation. In this case, the controller 404 may control the first memory 401 or the second memory 402 to read the left fractal matrix or the right fractal matrix intermittently. For example, the first memory 401 may read the left fractal matrix $A_{sr}$ once every two matrix operation cycles. In this way, a case in which the accumulation unit needs to perform single-cycle accumulation can be avoided, and design of excessive parallel circuits can be avoided.

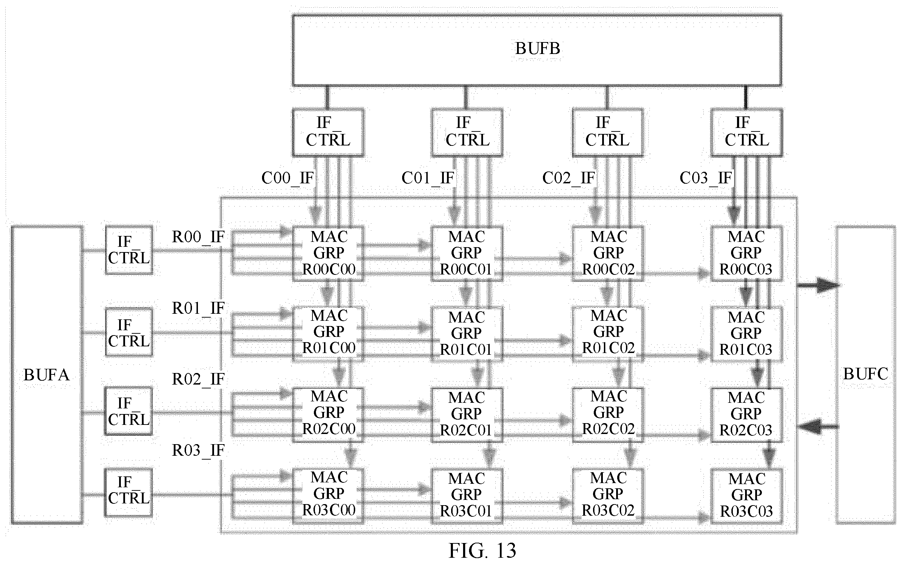

Based on an arrangement manner of the operation units in the operation circuit 403 shown in FIG. 4 and a control state of the foregoing controller 404, FIG. 13 is a schematic diagram of wiring in a specific operation circuit 403 according to an embodiment of this application.

BUFA is the first memory 401 of the left matrix in FIG. 4. BUFB is the second memory 402 of the right matrix in FIG. 4. BUFC is a third memory that stores an operation result of each operation unit 4031. The operation circuit 603 includes operation units of X rows*Y columns (it is assumed that X=4 and Y=4), that is, MAC GRP R00COO to MAC GRP R03CO3 in the figure. Each operation unit MAC GRP may perform a product operation of a row vector of a left fractal matrix and a column vector of a right fractal matrix.

The operation circuit 403 includes a 3-D MAC array (MAC Cube) and an accumulator (Accumulator), and is configured to execute a fractal matrix multiplication instruction, for example, C=A*B or C=A*B+C'. A, B, C, and C' are all two-dimensional matrices. In an actual execution process, multiplication of two matrices is performed in a fractal manner. The controller controls a large matrix to be decomposed into a fractal matrix that adapts to a hardware size of a multiplier, and performs combination based on a specific order (the foregoing manner).

For a specific architecture of the MAC, refer to structures shown in FIG. 5 and FIG. 6. The MAC includes a multiplier and an adder tree. At a matrix multiplication layer, the multiplication accumulator may run an operation of multiplying one row by one column and accumulating the result, namely, an element in a result matrix.

It may be understood that the schematic diagram of wiring shown in FIG. 13 may support the operation circuit 403 in completing a matrix multiplication operation of a left fractal matrix and a right fractal matrix in one clock cycle (a matrix operation cycle). Therefore, all X row vectors of $A_{sr}$ and all Y column vectors of $B_{rt}$ may arrive at a corresponding operation unit 4031 from a corresponding BUFA and BUFB at the same time by using a wiring manner shown in FIG. 13. The controller 404 may control the operation circuit 403 to perform a matrix multiplication operation on a left fractal matrix and a right fractal matrix in one clock cycle, and complete a matrix multiplication operation on a next left fractal matrix and a next right fractal matrix in a next clock cycle.

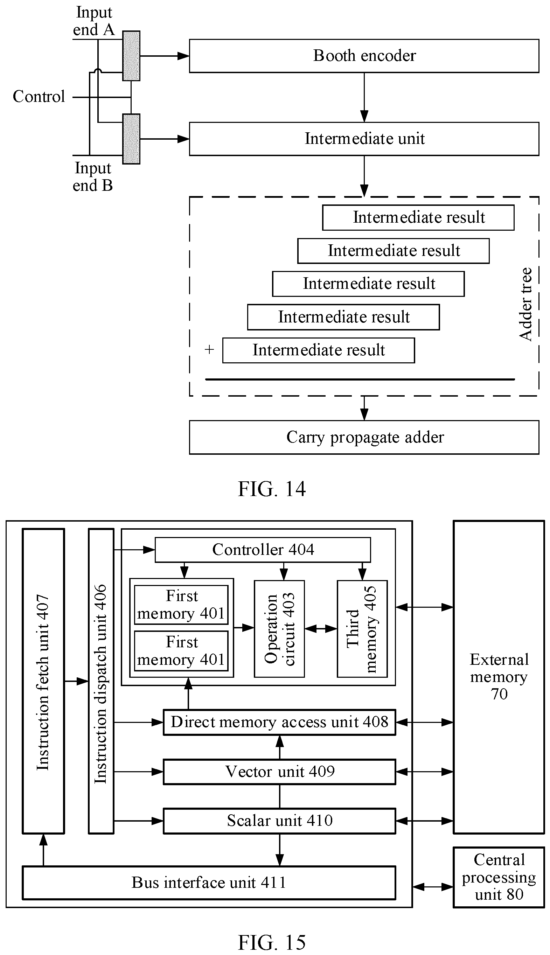

The following describes the multiplier in the operation unit 4031. It can be learned from the structure of the operation unit shown in FIG. 5 and FIG. 6 that the operation unit 1031 includes L multipliers and (L+1) adder trees. The multiplier may be a Booth algorithm (Booth) multiplier structure. FIG. 14 is a schematic diagram of a structure of a Booth multiplier according to an embodiment of this application. As shown in the figure, the Booth multiplier includes three parts: a Booth encoder (Booth Encoder), an adder tree (Adder Tree), and a carry propagate adder (Carry Propagate Adder)

The multiplier includes two input ports. One of two input digits needs to be inputted to the Booth encoder, and the other needs to be inputted to xxx. The digit inputted to the Booth encoder generates a series of partial products. This causes specific dynamic power consumption overheads. Frequent state flips of the Booth encoder cause a large amount of power consumption. Therefore, in this embodiment of this application, a signal with a low flip rate may be selected and sent to an input end of the Booth encoder in the multiplier, to reduce a flip rate of the Booth encoder and related logic of the Booth encoder, thereby finally reducing dynamic power consumption. For example, in the foregoing fractal matrix operation order controlled by the controller 404, when the controller reuses a left fractal matrix $A_{sr}$, $A_{sr}$ needs to be inputted to the Booth encoder. When the controller reuses a right fractal matrix $B_{rt}$, $B_{rt}$ needs to be inputted to the Booth encoder.

A determining signal at the input end may be determined by the controller 404. The controller 404 implements an application scenario of determining the fractal matrix, generates a control signal based on a reuse case of the fractal matrix, and sends the control signal to a MAC calculation unit, to control a digit inputted to the Booth encoder.

The following describes an overall structure of a matrix multiplier. FIG. 15 is a schematic diagram of a structure of a matrix multiplier according to an embodiment of this application. As shown in FIG. 15, the matrix multiplier includes an instruction dispatch unit 406, an instruction fetch unit 407, a direct memory access unit 408, a vector unit 409, a scalar unit 410, and a bus interface unit 411. Further, the matrix multiplier according to this embodiment of this application may be mounted as a co-processor to a central processing unit (central processing unit, CPU) 80, and the CPU allocates a calculation task to the matrix multiplier. Specifically, the CPU 80 may store a left matrix, a right matrix, and related instructions in an external memory 70. The matrix multiplier completes a matrix multiplication operation by reading the left matrix, the right matrix, and the related instructions in the external memory 70. The external memory 70 may be a double data rate synchronous dynamic random access memory (double data rate synchronous dynamic random access memory, DDR) or another readable and writable memory. The external memory may be a memory private to a matrix multiplier. Specifically, the first memory 401, the second memory 402, the third memory 405, and the external memory 70 are usually on-chip buffers (On-Chip Buffer).

The vector unit 409 (vector unit) is a computing device capable of performing various types of operations (such as floating-point multiplication, floating-point addition, floating-point size comparison) at a high degree of multi-parallelism. The vector unit 409 is configured to execute an SIMD (Single Instruction multiple data) instruction, and is responsible for direct data transfer between a unified buffer (Unified Buffer) and an L0C buffer.

The scalar unit 410 (Scalar Unit) is abasic operation device (such as addition, multiplication, comparison, shift, and the like) with various types of transforming functions.

The direct memory access unit 408 (direct memory access unit, DMA Unit) is configured to transfer data in each storage unit, for example, transfer data from the external memory 70 to the first memory 401. Specifically, when the direct memory access unit transfers, from the external memory or an internal memory of the matrix multiplier, matrix data involved in a multiplication operation, the matrix needs to be stored based on a result obtained after block division.

The instruction fetch unit 407 (instruction fetch unit, IFU) is an instruction fetch module, and is internally integrated with a program counter and an instruction memory. The instruction fetch unit fetches an instruction from a main memory through the bus interface unit 411, and decodes and controls an execution process.

The instruction dispatch unit 406 (Dispatch Unit) is configured to parse an instruction transmitted by the instruction fetch unit 407, and then submit an instruction of a type corresponding to the instruction to four pipeline units. The pipeline units are the scalar unit, the direct memory access unit, the vector unit, and a fractal matrix multiplication unit shown in the figure. The instruction dispatch unit mechanically controls order-preserving of the four pipelines.

It should be noted that the pipeline units have two types: asynchronous execution and synchronous execution. All types of instructions are transmitted in order-preserving mode. A difference is that the asynchronous execution unit executes the instruction and ends asynchronously, and the synchronous execution unit executes the instruction and ends synchronously. The scalar unit is a synchronous execution unit. The fractal matrix multiplication unit, the direct memory access unit, and the vector unit are asynchronously execution units.

It may be understood that embodiments of this application are not limited to data transfer in the matrix multiplier. Transfer from an external memory to an internal memory may further use data reuse to reduce bandwidth and optimize energy consumption. In embodiments of the present invention, a manner of splitting matrix data and a sequence of transferring matrix data are not limited. During data transfer, data reuse should be maximized, so that fractional matrix calculation is fully loaded in each unit time.

In embodiments of this application, through a multi-level cache structure, by using matrix fractal data reuse, an execution sequence of fractal instructions and a software control sequence above the fractal instructions multi-level cache data reuse can be implemented, thereby reducing dependency on a tightly coupled on-chip memory, optimizing energy efficiency, and reducing software programming complexity.

This application provides a matrix multiplier. Fractalization is performed on a large-size matrix based on a size of an operation unit in the matrix multiplier. A multiplication operation of the large-size matrix is converted into multiplication and accumulation calculation of a plurality of fractal matrices. In addition, an operation sequence between fractal matrices is changed by reusing the fractal matrices, to reduce read power consumption of a memory and avoid a single-cycle accumulation function of an accumulation unit. In this way, operation power consumption of the matrix multiplier can be greatly reduced, and a design difficulty of the matrix multiplier can be reduced, improving operation efficiency of matrix multiplication.

The foregoing describes in detail the matrix multiplier according to embodiments of this application. Although the principles and implementations of this application are described by using specific examples in this specification, the descriptions of the foregoing embodiments are merely intended to help understand the method and the core idea of the method of this application. In addition, a person of ordinary skill in the art may make modifications to the specific implementations and application range according to the idea of this application. In conclusion, the content of this specification is not construed as a limit on this application.

**Claims**

1. A matrix multiplier, wherein the matrix multiplier comprises an operation circuit and a controller, wherein

the operation circuit is connected to the controller;
the controller is configured to perform the following actions:

controlling the operation circuit to reuse a left fractal matrix $A_{sr}$ in n consecutive clock cycles, wherein the left fractal matrix $A_{sr}$ is any fractal matrix comprised in a left matrix, and the left matrix is an M*K matrix; and
controlling the operation circuit to use a right fractal matrix $B_{rt}$ in n right fractal matrices in each of the n consecutive clock cycles, wherein the right fractal matrix $B_{rt}$ is a fractal matrix in an $r^{th}$ row comprised in a right matrix, the n right fractal matrices are n consecutive right fractal matrices in the $r^{th}$ row comprised in the right matrix, the right matrix is a K*N matrix, M, K, N, s, r, t are all positive integers greater than 0, and n is a positive integer greater than 2; and

the operation circuit is configured to perform the following actions:

multiplying, in each of the n consecutive clock cycles, the left fractal matrix by a right fractal matrix in the n right fractal matrices, to obtain n matrix operation results.

2. The matrix multiplier according to claim 1, wherein the operation circuit is specifically configured to:

calculate $A_{sr}*B_{rt}$ in an $i^{th}$ clock cycle of the n consecutive clock cycles; and
calculate $A_{sr}*B_{r(t+1)}$ in an $(i+1)^{th}$ clock cycle of the n consecutive clock cycles, wherein 1≤i<n.

3. The matrix multiplier according to claim 1, wherein the controller is further configured to perform the following steps:

controlling the operation circuit to reuse a right fractal matrix $B_{rt}$ in the n consecutive clock cycles, wherein the right fractal matrix $B_{rt}$ is any fractal matrix comprised in the right matrix; and
controlling the operation circuit to use a left fractal matrix $A_{sr}$ of n left fractal matrices in each of the n consecutive clock cycles, wherein the left fractal matrix $A_{sr}$ is a fractal matrix of an $r^{th}$ column comprised in the right matrix, and the n left fractal matrices are n consecutive left fractal matrices of the $r^{th}$ column comprised in the right matrix; and
the operation circuit is further configured to perform the following actions:
multiplying, in each of the n consecutive clock cycles, the left fractal matrix $A_{sr}$ in the n left fractal matrices by the right fractal matrix $B_{rt}$, to obtain n matrix operation results.

4. The matrix multiplier according to claim 3, wherein the operation circuit is specifically configured to:

calculate $A_{sr}*B_{rt}$ in an $i^{th}$ clock cycle of the n consecutive clock cycles; and
calculate $A_{(s+1)\,r}*B_{rt}$ in an $(i+1)^{th}$ clock cycle of the n consecutive clock cycles, wherein 1≤i<n.

5. The matrix multiplier according to any one of claims 1 to 4, wherein the operation circuit comprises operation units of X rows * Y columns, and each operation unit is configured to perform, in a clock cycle, a vector multiplication operation on one piece of row vector data of the left fractal matrix and one piece of column vector data of the right fractal matrix, to obtain an operation result, wherein each operation unit comprises L multipliers, and each of the L multipliers is configured to perform a multiplication operation between a data element in the row vector data and a data element in the column vector data; and
the controller is further configured to perform the following actions:

dividing the left matrix into blocks by using a sub-block with a size of X*L as a unit to obtain S*R left fractal matrices, and marking a left fractal matrix in an $s^{th}$ row and an $r^{th}$ column in the S*R left fractal matrices as $A_{sr}$, wherein both S and R are positive integers greater than 0, s is any positive integer from 1 to S, and r is any positive integer from 1 to R; and
dividing the right matrix into blocks by using a sub-block with a size of L*Y as a unit to obtain R*T right fractal matrices, and marking a right fractal matrix in an $r^{th}$ row and a $t^{th}$ column in the R*T right fractal matrices as $B_{rt}$, wherein both R and T are positive integers greater than 0, r is any positive integer from 1 to R, and t is any positive integer from 1 to T.

6. The matrix multiplier according to claim 5, wherein the matrix multiplier further comprises a first memory and a second memory;

the first memory and the second memory are separately connected to the operation circuit;
the first memory is configured to store the left matrix, read the left fractal matrix, and input the left fractal matrix to the operation circuit;
the second memory is configured to store the right matrix, read the right fractal matrix, and input the right fractal matrix to the operation circuit; and
when the controller controls the operation circuit to reuse the left fractal matrix $A_{sr}$, the controller specifically performs the following steps:

when T can be exactly divided by n, controlling, by the controller, the operation circuit to reuse the left fractal matrix $A_{sr}$ for n times; and

after the operation circuit reuses the left fractal matrix for n times, controlling the operation circuit to reuse the left fractal matrix $A_{s(r+1)}$ for n times.

7. The matrix multiplier according to claim 6, wherein when the controller controls the operation circuit to reuse the left fractal matrix $A_{sr}$, the controller is further configured to perform the following steps:

when T cannot be exactly divided by n, and a remainder c is greater than or equal to 2, first controlling, by the controller, the operation circuit to reuse the left fractal matrix $A_{sr}$ for n times; and

when there are c columns of remaining right fractal matrices $B_{rt}$, controlling, by the controller, the operation circuit to reuse the left fractal matrix $A_{sr}$ for c times.

8. The matrix multiplier according to claim 6, wherein when the controller controls the operation circuit to reuse the left fractal matrix $A_{sr}$, the controller is further configured to perform the following steps:

when T cannot be exactly divided by n, and a remainder c is equal to 1, controlling the operation circuit to reuse the left fractal matrix $A_{sr}$ for n times;

when there are (n+1) columns of remaining right fractal matrices $B_{rt}$, the controlling, by the controller, the operation circuit to reuse the left fractal matrix $A_{sr}$ for z times, wherein z is a positive integer greater than or equal to 2 and less than or equal to n-1; and

finally controlling, by the controller, the operation circuit to reuse the left fractal matrix $A_{sr}$ for q times, wherein q is a positive integer greater than or equal to 2.

9. The matrix multiplier according to claim 6, wherein when the controller controls the operation circuit to reuse the right fractal matrix $B_{rt}$, the controller further performs the following steps:

when T can be exactly divided by n, controlling the operation circuit to reuse the right fractal matrix $B_{rt}$ for n times; and

after the operation circuit reuses the right fractal matrix $B_{rt}$ for n times, controlling the operation circuit to reuse the left fractal matrix $B_{(r+1)t}$ for n times.

10. The matrix multiplier according to claim 6, wherein when the controller controls the operation circuit to reuse the right fractal matrix $B_{rt}$, the controller further performs the following steps:

when S cannot be exactly divided by n, and a remainder c is greater than or equal to 2, first controlling the operation circuit to reuse the right fractal matrix $B_{rt}$ for n times; and

when there are c rows of left fractal matrices $A_{sr}$ left, controlling the operation circuit to reuse the right fractal matrix $B_{rt}$ for c times.

11. The matrix multiplier according to claim 6, wherein when the controller controls the operation circuit to reuse the right fractal matrix $B_{rt}$, the controller further performs the following steps:

when T cannot be exactly divided by n, and a remainder c is equal to 1, first controlling the operation circuit to reuse the right fractal matrix $B_{rt}$ for n times;

when there are (n+1) rows of remaining left fractal matrices $A_{sr}$, controlling the operation circuit to reuse the right fractal matrix $B_{rt}$ for p times, wherein p is a positive integer greater than or equal to 2 and less than or equal to n-1; and

finally controlling the operation circuit to reuse the right fractal matrix $B_{rt}$ for f times, wherein f is a positive integer greater than or equal to 2.

12. The matrix multiplier according to any one of claims 1 to 11, wherein each of the L multipliers further comprises an input end A, an input end B, a control module, a first register, a second register, and a third register, wherein

the input end A and the input end B are connected to the control module, and the control module is connected to the first register, the second register, and the third register;

the input end A is configured to input a first data element in a row vector to the first register;

the input end B is configured to input a second data element in a column vector to the second register, and the first data element corresponds to the second data element;

the first register is configured to store the first data element and input the first data element to the multiplier; the second register is configured to store the second data element and input the second data element to the multiplier;

the multiplier is configured to receive the first data element and the second data element that are inputted by the first register and the second register, and perform a multiplication operation on the first data element and the second data element; and

the control module is configured to generate a control signal based on the first data element and the first data element that are received by the input end A and the input end B, and the control signal is for controlling switch states of the first register, the second register, and the third register.

13. The matrix multiplier according to claim 12, wherein the control module is specifically configured to:

when the first data element received by the input end A or the second data element received by the input end B is 0, control, by the control module, the first register and the second register to be off; and generate, by the controller, a first control signal, wherein the first control signal is for writing an output result 0 to the third register, and output the output result;

when neither the first data element received by the input end A nor the second data element received by the input segment B is 0, control, by the control module, the first register and the second register to be closed, and control the third register to be off; and

control, by the controller, the first register to read the first data element, control the second register to read the second data element, control the multiplier to perform a multiplication operation on the first data element and the second data element to obtain an operation result, and output the operation result.

14. A matrix multiplication method, wherein the method comprises:

obtaining a left fractal matrix $A_{sr}$ and n right fractal matrices, wherein the left fractal matrix $A_{sr}$ is any fractal matrix comprised in a left matrix, the left matrix is an M*K matrix, the n right fractal matrices are n consecutive right fractal matrices in an $r^{th}$ row comprised in a right matrix, the right matrix is a K*N matrix, M, K, N, s, r, and t are all positive integers greater than 0, and n is a positive integer greater than 2;

controlling an operation circuit to reuse the left fractal matrix $A_{sr}$ in n consecutive clock cycles;

controlling the operation circuit to use a right fractal matrix $B_{rt}$ in the n right fractal matrices in the n consecutive clock cycles, wherein the right fractal matrix $B_{rt}$ is a fractal matrix in an $r^{th}$ row comprised in the right matrix; and

multiplying, in each of the n consecutive clock cycles, the left fractal matrix $A_{sr}$ by a right fractal matrix $B_{rt}$ in the n right fractal matrices, to obtain n matrix operation results.

15. The method according to claim 14, wherein the multiplying, in each of the n consecutive clock cycles, the left fractal matrix $A_{sr}$ by a right fractal matrix $B_{rt}$ in the n right fractal matrices, to obtain n matrix operation results comprises:

controlling, in an $i^{th}$ clock cycle of the n consecutive clock cycles, the operation circuit to calculate $A_{sr}*B_{rt}$; and

controlling, in an $(i+1)^{th}$ clock cycle of the n consecutive clock cycles, the operation circuit to calculate $A_{sr}* B_{r(t+1)}$, wherein $1 \leq i < n$.

16. The method according to claim 14, wherein the method further comprises:

controlling the operation circuit to reuse a right fractal matrix $B_{rt}$ in the n consecutive clock cycles, wherein the right fractal matrix $B_{rt}$ is any fractal matrix comprised in the right matrix;

controlling the operation circuit to use a left fractal matrix $A_{sr}$ of n left fractal matrices in each of the n consecutive clock cycles, wherein the left fractal matrix $A_{sr}$ is a fractal matrix of an $r^{th}$ column comprised in the right matrix, and the n left fractal matrices are n consecutive left fractal matrices of the $r^{th}$ column comprised in the right matrix; and

multiplying, in each of the n consecutive clock cycles, the left fractal matrix $A_{sr}$ in the n left fractal matrices by the right fractal matrix $B_{rt}$, to obtain n matrix operation results.

17. The method according to claim 16, wherein multiplying, in each of the n consecutive clock cycles, the left fractal matrix $A_{sr}$ in the n left fractal matrices by the right fractal matrix $B_{rt}$, to obtain n matrix operation results comprises:

controlling, in an $i^{th}$ clock cycle of the n consecutive clock cycles, the operation circuit to calculate $A_{sr}*B_{rt}$; and

controlling, in an $(i+1)^{th}$ clock cycle of the n consecutive clock cycles, the operation circuit to calculate $A_{(s+1)r}$

$*B_{rt}$, wherein 1≤i<n.

18. The method according to any one of claims 14 to 17, wherein the method further comprises:

dividing the left matrix into blocks by using a sub-block with a size of X*L as a unit to obtain S*R left fractal matrices;
marking a left fractal matrix in an $s^{th}$ row and an $r^{th}$ column in the S*R left fractal matrices as $A_{sr}$, wherein both S and R are positive integers greater than 0, s is any positive integer from 1 to S, and r is any positive integer from 1 to R;
dividing the right matrix into blocks by using a sub-block with a size of L*Y as a unit, to obtain R*T right fractal matrices; and
marking a right fractal matrix in an $r^{th}$ row and a $t^{th}$ column in the R*T right fractal matrices as $B_{rt}$, wherein both R and T are positive integers greater than 0, r is any positive integer from 1 to R, and t is any positive integer from 1 to T, wherein
the operation circuit comprises operation units of X rows * Y columns, wherein each operation unit is configured to perform, in a clock cycle, a vector multiplication operation on one piece of row vector data of the left fractal matrix $A_{sr}$ and one piece of column vector data of the right fractal matrix $B_{rt}$, to obtain an operation result, each operation unit comprises L multipliers, and each of the L multipliers is configured to perform a multiplication operation between a data element in the row vector data and a data element in the column vector data.

19. The method according to claim 18, wherein the method further comprises:

when T can be exactly divided by n, controlling the operation circuit to reuse each left fractal matrix $A_{sr}$ for n times; and
after the operation circuit reuses the left fractal matrix $A_{sr}$ for n times, controlling the operation circuit to reuse the left fractal matrix $A_{s(r+1)}$ for n times.

20. The method according to claim 18, wherein the method further comprises:

when T cannot be exactly divided by n, and a remainder c is greater than or equal to 2, first controlling the operation circuit to reuse the left fractal matrix $A_{sr}$ for n times; and
when there are c columns of remaining right fractal matrices $B_{rt}$, then controlling the operation circuit to reuse the left fractal matrix $A_{sr}$ for c times.

21. The method according to claim 18, wherein the method further comprises:

when T cannot be exactly divided by n, and a remainder c is equal to 1, first controlling the operation circuit to reuse the left fractal matrix $A_{sr}$ for n times;
when there are (n+1) columns of remaining right fractal matrices $B_{rt}$ left, then controlling the operation circuit to reuse the left fractal matrix $A_{sr}$ for z times, wherein z is a positive integer greater than or equal to 2 and less than or equal to n-1; and
finally controlling the operation circuit to reuse the left fractal matrix $A_{sr}$ for q times, wherein q is a positive integer greater than or equal to 2.

22. The method according to claim 18, wherein the method further comprises:

when T can be exactly divided by n, controlling the operation circuit to reuse the right fractal matrix $B_{rt}$ for n times; and
after the operation circuit reuses the right fractal matrix $B_{rt}$ for n times, controlling the operation circuit to reuse a left fractal matrix $B_{(r+1)t}$ for n times.

23. The method according to claim 18, wherein the method further comprises:

when S cannot be exactly divided by n, and a remainder c is greater than or equal to 2, first controlling the operation circuit to reuse the right fractal matrix $B_{rt}$ for n times; and
when there are c rows of the left fractal matrices $A_{sr}$ left, controlling the operation circuit to reuse the right fractal matrix $B_{rt}$ for c times.

24. The method according to claim 18, wherein the method further comprises:

when T cannot be exactly divided by n, and a remainder c is equal to 1, first controlling the operation circuit to reuse the right fractal matrix $B_{rt}$ for n times;

when there are (n+1) rows of remaining left fractal matrices $A_{sr}$, then controlling the operation circuit to reuse the right fractal matrix $B_{rt}$ for p times, wherein p is a positive integer greater than or equal to 2 and less than or equal to n-1; and

finally controlling the operation circuit to reuse the right fractal matrix $B_{rt}$ for f times, wherein f is a positive integer greater than or equal to 2.

$$\begin{bmatrix} A_{11} & A_{12} & \cdots & A_{1K} \\ A_{21} & A_{22} & \cdots & A_{2K} \\ \vdots & \vdots & \ddots & \vdots \\ A_{M1} & A_{M2} & \cdots & A_{MK} \end{bmatrix} * \begin{bmatrix} B_{11} & B_{12} & \cdots & B_{1N} \\ B_{21} & B_{22} & \cdots & B_{2N} \\ \vdots & \vdots & \ddots & \vdots \\ B_{K1} & B_{K2} & \cdots & B_{KN} \end{bmatrix} = \begin{bmatrix} \sum_{j=1}^{K} A_{1j}B_{j1} & \sum_{j=1}^{K} A_{1j}B_{j2} & \cdots & \sum_{j=1}^{K} A_{1j}B_{jN} \\ \sum_{j=1}^{K} A_{2j}B_{j1} & \sum_{j=1}^{K} A_{2j}B_{j2} & \cdots & \sum_{j=1}^{K} A_{2j}B_{jN} \\ \vdots & \vdots & \ddots & \vdots \\ \sum_{j=1}^{K} A_{Mj}B_{j1} & \sum_{j=1}^{K} A_{Mj}B_{j2} & \cdots & \sum_{j=1}^{K} A_{Mj}B_{jN} \end{bmatrix}$$

FIG. 1

FIG. 2

FIG. 3

FIG. 4

Operation unit 4031

a[0,0] b[0,0]    a[0,1] b[1,0]    a[0,2] b[2,0]    a[i,j]  b[j,n]

| Multiplier | | Multiplier | | Multiplier | | Multiplier |

Adder tree (L+1)

Third memory 405

FIG. 5

A

=0

B

=0

Gating
signal A

Gating
signal B

Register
603

Register
604

Register
605

Register
606

Multiplier
601

Control module
602

FIG. 6

K columns of elements

L columns

Unit matrix P

| | | | | |
|---|---|---|---|---|
| A11 | A12 | ... | ... | A1R |
| A21 | A22 | ... | ... | A2R |
| | | | | |
| | | | | |
| AS1 | AS2 | ... | ... | ASR |

X rows

M rows of elements

FIG. 7

A11

A12

| a[0,0] | a[0,1] | a[0,2] | a[0,3] | a[0,4] | a[0,5] |
| a[1,0] | a[1,1] | a[1,2] | a[1,3] | a[1,4] | a[1,5] |
| | | | | 1 | |
| a[2,0] | a[2,1] | a[2,2] | a[2,3] | a[2,4] | a[2,5] |
| a[3,0] | a[3,1] | a[3,2] | a[3,3] | a[3,4] | a[3,5] |

A21 A22

| a[4,0] | a[4,1] | a[4,2] | a[4,3] | a[4,4] | a[4,5] |
| a[5,0] | a[5,1] | a[5,2] | a[5,3] | a[5,4] | a[5,5] |
| | 1 | | | | |
| a[6,0] | a[6,1] | a[6,2] | a[6,3] | a[6,4] | a[6,5] |
| a[7,0] | a[7,1] | a[7,2] | a[7,3] | a[7,4] | a[7,5] |

A31 A32

| a[8,0] | a[8,1] | a[8,2] | a[8,3] | a[8,4] | a[8,5] |
| a[9,0] | a[9,1] | a[9,2] | a[9,3] | a[9,4] | a[9,5] |
| a[10,0] | a[10,1] | a[10,2] | a[10,3] | a[10,4] | a[10,5] |
| a[11,0] | a[11,1] | a[11,2] | a[11,3] | a[11,4] | a[11,5] |

Matrix A

B11 B12 B13

| b[0,0] | b[0,1] | b[0,2] | b[0,3] | b[0,4] | b[0,5] | b[0,6] | b[0,7] | b[0,8] | b[0,9] | b[0,10] | b[0,11] |
| b[1,0] | b[1,1] | b[1,2] | b[1,3] | b[1,4] | b[1,5] | b[1,6] | b[1,7] | b[1,8] | b[1,9] | b[1,10] | b[1,11] |
| b[2,0] | b[2,1] | b[2,2] | b[2,3] | b[2,4] | b[2,5] | b[2,6] | b[2,7] | b[2,8] | b[2,9] | b[2,10] | b[2,11] |

| b[3,0] | b[3,1] | b[3,2] | b[3,3] | b[3,4] | b[3,5] | b[3,6] | b[3,7] | b[3,8] | b[3,9] | b[3,10] | b[3,11] |
| b[4,0] | b[4,1] | b[4,2] | b[4,3] | b[4,4] | b[4,5] | b[4,6] | b[4,7] | b[4,8] | b[4,9] | b[4,10] | b[4,11] |
| b[5,0] | b[5,1] | b[5,2] | b[5,3] | b[5,4] | b[5,5] | b[5,6] | b[5,7] | b[5,8] | b[5,9] | b[5,10] | b[5,11] |

B21 B22 B23

Matrix B

FIG. 8

$$\begin{bmatrix} A11 & A12 & A13 & A14 & A15 & A16 & A17 & A18 \\ A21 & A22 & A23 & A24 & A25 & A26 & A27 & A28 \\ A31 & A32 & A33 & A34 & A35 & A36 & A37 & A38 \\ A41 & A42 & A43 & A44 & A45 & A46 & A47 & A48 \\ A51 & A52 & A53 & A54 & A55 & A56 & A57 & A58 \\ A61 & A62 & A63 & A64 & A65 & A66 & A67 & A68 \\ A71 & A72 & A73 & A74 & A75 & A76 & A77 & A78 \end{bmatrix}$$

Left matrix A

$$\begin{bmatrix} B11 & B12 & B13 & B14 & B15 & B16 & B17 & B18 \\ B21 & B22 & B23 & B24 & B25 & B26 & B27 & B28 \\ B31 & B32 & B33 & B34 & B35 & B36 & B37 & B38 \\ B41 & B42 & B43 & B44 & B45 & B46 & B47 & B48 \\ B51 & B52 & B53 & B54 & B55 & B56 & B57 & B58 \\ B61 & B62 & B63 & B64 & B65 & B66 & B67 & B68 \\ B71 & B72 & B73 & B74 & B75 & B76 & B77 & B78 \\ B81 & B82 & B83 & B84 & B85 & B86 & B87 & B88 \end{bmatrix}$$

Right matrix B

FIG. 9

$$\begin{bmatrix} A11 & A12 & A13 & A14 & A15 & A16 & A17 & A18 \\ A21 & A22 & A23 & A24 & A25 & A26 & A27 & A28 \\ A31 & A32 & A33 & A34 & A35 & A36 & A37 & A38 \\ A41 & A42 & A43 & A44 & A45 & A46 & A47 & A48 \\ A51 & A52 & A53 & A54 & A55 & A56 & A57 & A58 \\ A61 & A62 & A63 & A64 & A65 & A66 & A67 & A68 \\ A71 & A72 & A73 & A74 & A75 & A76 & A77 & A78 \end{bmatrix}$$

Left matrix A

$$\begin{bmatrix} B11 & B12 & B13 & B14 & B15 & B16 \\ B21 & B22 & B23 & B24 & B25 & B26 \\ B31 & B32 & B33 & B34 & B35 & B36 \\ B41 & B42 & B43 & B44 & B45 & B46 \\ B51 & B52 & B53 & B54 & B55 & B56 \\ B61 & B62 & B63 & B64 & B65 & B66 \\ B71 & B72 & B73 & B74 & B75 & B76 \\ B81 & B82 & B83 & B84 & B85 & B86 \end{bmatrix}$$

Right matrix B

FIG. 10

$$\begin{bmatrix} A11 & A12 & A13 & A14 & A15 & A16 & A17 & A18 \\ A21 & A22 & A23 & A24 & A25 & A26 & A27 & A28 \\ A31 & A32 & A33 & A34 & A35 & A36 & A37 & A38 \\ A41 & A42 & A43 & A44 & A45 & A46 & A47 & A48 \\ A51 & A52 & A53 & A54 & A56 & A57 & A58 \\ A61 & A62 & A63 & A64 & A65 & A66 & A67 & A68 \\ A71 & A72 & A73 & A74 & A75 & A76 & A77 & A78 \end{bmatrix}$$

Left matrix A

$$\begin{bmatrix} B11 & B12 & B13 & B14 & B15 & B16 & B17 \\ B21 & B22 & B23 & B24 & B25 & B26 & B27 \\ B31 & B32 & B33 & B34 & B35 & B36 & B37 \\ B41 & B42 & B43 & B44 & B45 & B46 & B47 \\ B51 & B52 & B53 & B54 & B55 & B56 & B57 \\ B61 & B62 & B63 & B64 & B65 & B66 & B67 \\ B71 & B72 & B73 & B74 & B75 & B76 & B77 \\ B81 & B82 & B83 & B84 & B85 & B86 & B87 \end{bmatrix}$$

Right matrix B

FIG. 11

$$\begin{bmatrix} A11 & A12 & A13 & A14 & A15 & A16 & A17 & A18 \\ A21 & A22 & A23 & A24 & A25 & A26 & A27 & A28 \\ A31 & A32 & A33 & A34 & A35 & A36 & A37 & A38 \\ A41 & A42 & A43 & A44 & A45 & A46 & A47 & A48 \\ A51 & A52 & A53 & A54 & A55 & A56 & A57 & A58 \\ A61 & A62 & A63 & A64 & A65 & A66 & A67 & A68 \\ A71 & A72 & A73 & A74 & A75 & A76 & A77 & A78 \end{bmatrix}$$

Left matrix A

$$\begin{bmatrix} B11 & B12 & B13 & B14 & B15 \\ B21 & B22 & B23 & B24 & B25 \\ B31 & B32 & B33 & B34 & B35 \\ B41 & B42 & B43 & B44 & B45 \\ B51 & B52 & B53 & B54 & B55 \\ B61 & B62 & B63 & B64 & B65 \\ B71 & B72 & B73 & B74 & B75 \\ B81 & B82 & B83 & B84 & B85 \end{bmatrix}$$

Right matrix B

FIG. 12

FIG. 13

Input
end A

Control

Input
end B

Booth encoder

Intermediate unit

Intermediate result

Intermediate result

Intermediate result

Intermediate result

+ Intermediate result

Adder tree

Carry propagate adder

FIG. 14

Instruction fetch unit 407

Instruction dispatch unit 406

Controller 404

First memory 401

First memory 401

Operation circuit 403

Third memory 405

Direct memory access unit 408

Vector unit 409

Scalar unit 410

Bus interface unit 411

External memory 70

Central processing unit 80

FIG. 15

**INTERNATIONAL SEARCH REPORT**

| International application No. |
| --- |
| **PCT/CN2021/089880** |

| A. | CLASSIFICATION OF SUBJECT MATTER |
| --- | --- |

G06F 17/16(2006.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, WPI, EPODOC, CNPAT, IEEE: 矩阵, 乘法器, 分形, 分块, 复用, 时钟, 周期, matrix, multiplier, fractal, block, multiplex, clock, period,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109992743 A (HUAWEI TECHNOLOGIES CO., LTD.) 09 July 2019 (2019-07-09) description, paragraphs [0004], [0028], and [0069]-[0118] | 1-5, 12-18 |
| A | CN 104899182 A (NATIONAL UNIVERSITY OF DEFENSE TECHNOLOGY OF PLA) 09 September 2015 (2015-09-09) entire document | 1-24 |
| A | CN 111581595 A (IFLYTEK CO., LTD.) 25 August 2020 (2020-08-25) entire document | 1-24 |
| A | US 2019385048 A1 (INTERNATIONAL BUSINESS MACHINES CORP.) 19 December 2019 (2019-12-19) entire document | 1-24 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 December 2021** | **28 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

International application No.

**PCT/CN2021/089880**

| Patent document cited in search report | | | Publication date (day/month/year) | Patent family member(s) | | | Publication date (day/month/year) |
|---|---|---|---|---|---|---|---|
| CN | 109992743 | A | 09 July 2019 | KR | 20200098684 | A | 20 August 2020 |
| | | | | JP | 2021508125 | A | 25 February 2021 |
| | | | | WO | 2019128404 | A1 | 04 July 2019 |
| | | | | EP | 3726399 | A1 | 21 October 2020 |
| | | | | CN | 111859273 | A | 30 October 2020 |
| | | | | US | 2020334322 | A1 | 22 October 2020 |
| CN | 104899182 | A | 09 September 2015 | None | | | |
| CN | 111581595 | A | 25 August 2020 | None | | | |
| US | 2019385048 | A1 | 19 December 2019 | CN | 112204579 | A | 08 January 2021 |
| | | | | GB | 2587175 | A | 17 March 2021 |
| | | | | WO | 2019243962 | A1 | 26 December 2019 |
| | | | | JP | 2021527864 | W | 14 October 2021 |

Form PCT/ISA/210 (patent family annex) (January 2015)